# EUROPÄISCHE PATENTSCHRIFT

(11) **EP 4 306 606 B1**
(45) Veröffentlichungstag und Bekanntmachung des Hinweises auf die Patenterteilung: **04.09.2024**
(21) Anmeldenummer: 22184173.7
(22) Anmeldetag: 11.07.2022
(51) Int. Cl.: C09J 131/04, C09J 133/06, C08L 29/04, C08L 31/04

(54) **WÄSSRIGER DISPERSIONS-PARKETTKLEBSTOFF MIT GERINGER DICHTE UND BESONDERS VORTEILHAFTEN MECHANISCHEN EIGENSCHAFTEN**
AQUEOUS DISPERSION OF PARQUET FLOOR ADHESIVE WITH LOW DENSITY AND PARTICULARLY ADVANTAGEOUS MECHANICAL PROPERTIES
ADHÉSIF POUR PARQUETS EN DISPERSION AQUEUSE À FAIBLE DENSITÉ ET À DES PROPRIÉTÉS MÉCANIQUES PARTICULIÈREMENT AVANTAGEUSES

(43) Veröffentlichungstag der Anmeldung: 17.01.2024
(73) Patentinhaber: Stauf Klebstoffwerk GmbH, 57234 Wilnsdorf (DE)
(72) Erfinder: GAHLMANN, Frank, 57271 Hilchenbach (DE)
(74) Vertreter: Pfenning, Meinig & Partner mbB

(56) Entgegenhaltungen:
- WO-A1-01/18143
- WO-A1-2015/071095

## Beschreibung

Wässrige Dispersions-Parkettklebstoffe auf Basis von Vinylacetat-haltigen Polymeren werden seit Jahrzehnten für die Verklebung von Parkett eingesetzt. Der Härtungsmechanismus dieser Klebstoffe beruht auf der Verfilmung von in Wasser dispergierten Polymerpartikeln, sogenannten Latexteilchen, ausgelöst durch die Verdunstung von Wasser oder dessen Abgabe an die umgebenden Substrate und/oder Untergründe. Nach dem Auftrag des Klebstoffs nähern sich die Latexteilchen sukzessive einander an, treten zunehmend miteinander in Kontakt, verfilmen und bilden schlussendlich einen geschlossenen Polymerfilm, der den Untergrund mit dem zu verklebenden Substrat verbindet. Ein potentiell in der Dispersion enthaltenes Schutzkolloid wie Polyvinylalkohol hält die Latexteilchen auf Abstand und verhindert damit ein vorzeitiges, schon während der Lagerung auftretendes Koagulieren der Dispersion.

In ihrer jahrzehntelangen Entwicklungsphase haben sich Dispersions-Parkettklebstoffe auf Basis von Vinylacetat-Homo- und Copolymeren zu zuverlässigen Produkten mit zufriedenstellenden Festigkeiten und Verarbeitungseigenschaften entwickelt. Auch die aufgrund des Wasseranteils unvermeidbare nachteilige holzquellende Wirkung befindet sich auf einem akzeptablen Niveau. Die Ursache für die vergleichsweise geringe holzquellende Wirkung ist ein hoher Anteil mineralischer Füllstoffe, der den Wassergehalt und damit auch die Quellung des Parketts auf ein akzeptables Maß begrenzt. Die überwiegend verwendeten Calciumcarbonat-Füllstoffe sind preiswert und weder umwelt- noch gesundheitsgefährdend. Sie sind in allen kommerziell verfügbaren Dispersions-Parkettklebstoffen im zumeist höheren, zweistelligen Prozentbereich enthalten und stellen i.d.R. den Hauptbestandteil dar. Die Gehalte polymerer Bindemittel herkömmlicher Dispersions-Parkettklebstoffe liegen typischerweise bei 15 bis 25 Massenprozent. Zu ihrer Dispergierung und der anderer Bestandteile der Zusammensetzung sowie zum Einstellen guter Verarbeitungseigenschaften ist der Wassergehalt zumeist etwas höher als der Polymergehalt, so dass das Massenverhältnis von Polymer zu Wasser zu Quotienten von ca. 0,6 bis 0,9 führt.

Die mineralischen Füllstoffe verleihen dem verarbeitungsfertigen Klebstoff eine pastöse Konsistenz mit pseudoplastischer Rheologie, d.h. der Klebstoffauftrag mit Hilfe eines Zahnspachtels geht leicht von der Hand und führt zu einem stabilen Rippenstand der gezogenen Klebstoffraupen. Die Viskositäten η der Dispersions-Parkettklebstoffe liegen typischerweise im Bereich von 50.000 bis 200.000 mPa·s (Rotationsviskosimeter Brookfield DV2T-RV, Spindel Nr. R7, Spindeldrehzahl 20 U/min, Temperatur 20°C; DIN EN ISO 2555:2018-09). Das pseudoplastische rheologische Verhalten lässt sich am Verlauf der Kurve ablesen, die die Viskosität in Abhängigkeit von der Scherrate zeigt. Der Einfachheit halber wird nicht der gesamte Kurvenverlauf bestimmt, sondern eine Dreipunktmessung durchgeführt, d.h. die Viskosität wird bei drei unterschiedlichen Drehzahlen gemessen; bei 20 U/min, 5 U/min und 1 U/min. Die Größe der Quotienten zwischen diesen Messwerten gibt einen Hinweis auf den Verlauf der Viskositäts-Scherraten-Kurve. Die Quotienten der Viskositäten [η(20 U/min) ÷ η(5 U/min)] bzw. [η(20 U/min) ÷ η(1 U/min)] sind ein Maß für die Stärke des Abfalls der Viskositäts-Scherraten-Kurve bei zunehmender Scherrate. Die Quotienten werden auch als Strukturfaktoren bezeichnet (STF 20/5 bzw. STF 20/1). Dispersions-Parkettklebstoffe zeigen ein ausgeprägtes strukturviskoses Verhalten, wenn der Strukturfaktor STF 20/5 ≤ 0,45 und der Strukturfaktor STF 20/1 ≤ 0,17 ist. Strukturfaktoren sind dimensionslose Größen. Je kleiner ihr Wert ist, desto ausgeprägter ist die Pseudoplastizität.

In der Praxis werden die Verarbeitungseigenschaften von Dispersions-Parkettklebstoffen durch die Parameter "Leichtigkeit der Verstreichbarkeit" und "Standfestigkeit/Stabilität der mittels Zahnspachtel gezogenen Klebstoffrippen" beurteilt. Diese beiden Eigenschaften werden im Handversuch geprüft und mit Schulnoten (1 bis 6 in 0,5er Schritten) bewertet. Sie haben ihr quantitatives Korrelat in den Messgrößen Viskosität (η bei 20 U/min) und Pseudoplastizität (STF 20/5 und STF 20/1). Das Zusammenspiel von Viskosität und Pseudoplastizität beeinflusst die Verarbeitungseigenschaften. So kann ein vergleichsweise hochviskoser Klebstoff mit sehr kleinen Strukturfaktoren, also einem ausgeprägten pseudoplastischen Fließverhalten, genauso gute oder bessere Verarbeitungseigenschaften aufweisen wie ein Klebstoff mit geringerer Viskosität, aber größeren Strukturfaktoren.

Auch die für einen Dispersions-Parkettklebstoff notwendigen offenen Zeiten von mindestens 20 Minuten lassen sich mit Hilfe mineralischer Füllstoffe einstellen. Nach dem Aushärten ist der Klebstoff quasi ein Verbundwerkstoff mit hohen Zugscherfestigkeiten - geeignet um den dynamischen und statischen Scherkräften standzuhalten, die bei der Parkettnutzung und den jahreszeitlich bedingten Holzfeuchteschwankungen auftreten.

Der durch die Füllstoffzugabe reduzierte Wassergehalt der Dispersions-Parkettklebstoffe von ca. 25 ± 5 Massenprozent ist in der Praxis mit einer akzeptablen holzquellenden Wirkung von weniger als 0,6% Querausdehnung im Holzquellungstest verbunden. Auf der anderen Seite führt der hohe Gehalt an mineralischen Füllstoffen jedoch zu einer eher geringen Elastizität und Verformbarkeit der Klebstoffe - abzulesen an hohen Elastizitätsmodulen (E-Modulen) und geringen Zugbruchdehnungen.

Um die bei der Parkettnutzung auftretenden kurzfristigen dynamischen Belastungen, wie sie beim Springen, Laufen/Stoppen, Möbelrücken oder Herabfallen von schweren Gegenständen entstehen, abfangen zu können, sollte der Klebstoff ein elastisches Verhalten zeigen. Andernfalls bestünde die Gefahr eines Bruchs der Klebstofffuge oder des Untergrunds mit den daraus resultierenden Problemen wie Ablösungen der Parkettelemente oder Zerstörung des Untergrunds. Auf der anderen Seite darf das elastische Verhalten des Klebstoffs aber auch nicht zu ausgeprägt sein, da ansonsten ein notwendiges Niveau an Maßhaltigkeit der Verklebung nicht gewährleistet werden kann.

Idealerweise weisen Dispersions-Parkettklebstoffe im ausgehärteten Zustand E-Module von 10 bis 120 N/mm² (Prüfbedingungen DIN EN ISO 527-1:2019-12 und DIN EN ISO 527-3:2019-02) auf. Darunter oder darüber liegende E-Module sind für die Parkettverklebung nachteilig. Bei deutlich abweichenden Werten (E-Module im hohen dreistelligen Bereich) sind auch schwere Schadensbilder, wie zu handtellergroßen Schollen aufgebrochene Untergründe, zu erwarten.

Neben dem E-Modul ist die Zugbruchdehnung ein weiterer wichtiger Parameter zur Charakterisierung der mechanischen Eigenschaften eines Dispersions-Parkettklebstoffs und gibt einen Hinweis auf dessen maximale Verformbarkeit. Diese wird ebenso wie der E-Modul unter Zugbelastung gemessen. Ein ausgehärteter Klebstofffilm wird bis zum Reißen gestreckt und die unmittelbar davor auftretende Verlängerung im Vergleich zur Ausgangslänge bestimmt. Zugbruchdehnungen sind im Zusammenhang mit den E-Modulen zu sehen. Um bei arbeitendem Holz ein Reißen der Klebstofffuge zu verhindern, bedürfen Klebstoffe mit geringen E-Modulen hoher Zugbruchdehnungen. Umgekehrt gilt dies jedoch nicht. Klebstoffe mit hohen E-Modulen dürfen auch hohe Zugbruchdehnungen aufweisen. Um auch bei sehr starken Holzfeuchteänderungen und daraus resultierend sehr großen Maßänderungen des Holzes einen Kohäsionsbruch des Klebstoffs sicher zu vermeiden, weisen Dispersions-Parkettklebstoffe idealerweise Zugbruchdehnungen von ≥ 75% auf, gemessen gemäß Normvorschrift DIN EN ISO 527-1:2019-12.

Grundvoraussetzung für funktionelle Dispersions-Parkettklebstoffe ist eine ausreichende Festigkeit. Die Anforderungen dazu sind in der Industrienorm DIN EN ISO 17178:2020-06 bezüglich Zugscherfestigkeit und Gleitung festgelegt. Es gelten dabei unterschiedliche Anforderungen an elastische, hart-elastische und harte Parkettklebstoffe. Für einen harten Parkettklebstoff muss die Zugscherfestigkeit größer gleich 3,0 N/mm² sein. Bei diesem Test werden die Prüfkörper nach der Klebung vorübergehend zusammen gepresst, so dass eine Klebstofffuge mit geringer, nicht näher definierter Schichtdicke entsteht. Für einen hart-elastischen Parkettklebstoff muss die Zugscherfestigkeit größer gleich 2,0 N/mm² sein und für einen elastischen Parkettklebstoff größer gleich 1,0 N/mm². Bei diesen beiden Tests ist eine Klebstofffugendicke von 1,0 ± 0,3 mm vorgeschrieben. Ein hart-elastischer Klebstoff muss im Zugscherfestigkeitstest zusätzlich eine Gleitung von ≥ 0,5 und ein elastischer Klebstoff von ≥ 1,0 aufweisen. Die Gleitung ist eine dimensionslose Größe. Sie gibt das Verhältnis der maximal ausgelenkten Strecke der Klebstofffuge in Zugrichtung zur Dicke der Klebstofffuge beim Zugscherfestigkeitsversuch an. Die Anforderungen an Zugscherfestigkeit und Gleitung müssen für alle Klebstoffe nach einer Aushärtungszeit von 3 Tagen und 28 Tagen erfüllt sein.

Neben der Festigkeit, die der vollständig ausgehärtete Klebstoff erreicht, ist bei Dispersions-Parkettklebstoffen auch die Festigkeitsentwicklung in der Zeit unmittelbar nach der Verklebung, die sogenannte Abbindegeschwindigkeit bedeutsam. Der Festigkeitsaufbau muss mit der richtigen Geschwindigkeit erfolgen, d.h. er darf nicht zu schnell sein und muss im Einklang mit der Wasseraufnahmegeschwindigkeit des Holzes stehen. Die Wasseraufnahme durch das Holz verläuft über einige Stunden. Verläuft der Festigkeitsaufbau zu schnell, sind, vereinfacht gesagt, die Parkettelemente fixiert bevor das Holz quellen und sich ausdehnen kann. Als Folge entstünden hohe Spannungen, die letztlich den Untergrund als in der Regel schwächste Komponente zerstören würden. Die Sprengkraft von Holz ist aus der historischen Steinbearbeitung und dem Bergbau bekannt. Eine für die Praxis hinreichend langsame Abbindegeschwindigkeit liegt vor, wenn eine Stunde nach der Parkettverlegung die Zugscherfestigkeit der gepressten Prüfkörper ≤ 0,8 N/mm² ist (Prüfbedingungen: DIN EN ISO 17178:2020-06).

Für eine sichere Parkettverklebung sind neben den mechanischen Eigenschaften auch die Haftungseigenschaften der Dispersions-Parkettklebstoffe bedeutsam. Auf der einen Seite besteht Parkett aus unterschiedlichsten Holzarten (Buche, Eiche, Esche, Erle, Lärche, Fichte, Kiefer, Douglasie, Nussbaum, Birke, Ahorn, Kirsche, Olive, Bambus, Akazie, Robinie, Ipe Lapacho, Doussie, Jatoba, Cumaru, Mahaghoni, Merbau, Wenge, Zebrano, Iroko, Kambala, Zeder etc.) mit einer großen Bandbreite hinsichtlich der chemischen Zusammensetzung und der physikalischen Eigenschaften. Völlig andere Eigenschaften als Holz haben auf der anderen Seite die Untergründe, auf denen das Parkett dauerhaft fest geklebt wird. Hier muss der Klebstoff in der Lage sein, eine gute Haftung zu unterschiedlichen Untergründen wie Beton, Zementestrich, Zementfließestrich, Calciumsulfatestrich, Calciumsulfatfließestrich, abgesandetem Gußasphalt, OSB-Platten, Spanplatten, Gipsfaserplatten, zementgebundenen Holzfaserplatten, Holzdielen, zementären Spachtelmassen, Calciumsulfat-Spachtelmassen, Dispersions-Spachtelmassen, keramischen Fliesen, Naturstein, Trockenbauplatten und vielen anderen, aufzubauen. Die Haftungseigenschaften sind über Zugscherfestigkeitsmessungen mittels des sogenannten Presso Mess-Geräts an entsprechenden Substraten und Untergründen zugänglich.

Ein weiterer, zunehmend in den Fokus geratender Aspekt ist das spezifische Gewicht der Klebstoffe. Kommerziell erhältliche Dispersions-Parkettklebstoffe besitzen aufgrund ihres hohen Gehalts an mineralischen Füllstoffen typischerweise Dichten im Bereich von 1,4 bis 1,6 g/cm³. Da der Auftrag der Dispersions-Parkettklebstoffe auf den Untergrund nicht nach Gewicht, sondern nach Volumen erfolgt, besteht kundenseitig der Wunsch nach Klebstoffen mit geringeren Dichten von ≤ 1,1 g/cm³. Diese hätten bei identischem Volumen den Vorteil geringerer Transport- und Lagerkosten (Transportgewicht, Treibstoffverbrauch, Regalbelastung, Ressourcenschonung etc.) und wären für den Anwender aufgrund des reduzierten Gewichts leichter in der Handhabung, z.B. beim Transport auf der Baustelle. Versuche diesem Wunsch entgegenzukommen und die Dichte der Klebstoffe durch Einarbeitung von Leichtfüllstoffen signifikant zu senken, führen jedoch nur bedingt zum Erfolg. Leichtfüllstoffe sind vor allem gasgefüllte Hohlkugeln aus z.B. Glas, Silikaten, Kunststoff (z.B. Expancel^{®}) oder gemahlene hohlraumreiche Minerale wie Bims oder geblähter Perlit. Aufgrund ihrer sehr geringen Dichten lassen sich mit mikroskopischen Hohlkörpern zwar deutliche Dichtereduktionen erzielen, jedoch ist dies mit Nachteilen bei den Verarbeitungseigenschaften und den mechanischen Kenndaten verbunden. Insbesondere Zugscherfestigkeit und Zugbruchdehnung leiden deutlich.

Aber auch die Rheologie wird negativ beeinflusst. Eine gute pseudoplastische Rheologie macht sich in leichter Verstreichbarkeit, einem stabilen Rippenstand der mit dem Zahnspachtel gezogenen Klebstoffraupen (Schulnoten 1 bis 2,5) und Strukturfaktoren von STF (20/5) ≤ 0,45 und STF (20/1) ≤ 0,17 bemerkbar. Formstabile Klebstoffraupen sind notwendig, um Unebenheiten des Untergrunds und Deformationen/Maßabweichungen der Parkettelemente (Abweichungen von der absoluten Planlage) zu überbrücken, so dass eine vollflächige, möglichst Hohlstellenfreie Klebung des Parketts auf den Untergrund entsteht. Auftretende Pseudoplastizitätseinbußen der Leichtfüllstoff-gefüllten Dispersions-Parkettklebstoffe führen zu instabilen, zum Verlaufen neigenden Klebstoffraupen (Schulnote 4 bis 5) und weisen Strukturfaktoren oberhalb der definierten Grenzwerte für STF (20/5) und STF (20/1) auf. Aufgrund der großen Teilchengröße der Leichtfüllstoffe erscheint der Klebstoff beim Auftrag zudem sandig und knirschend und die Verstreichbarkeit ist beeinträchtigt (Schulnote 3 bis 5).

Die Nachteile, die Leichtfüllstoffe insbesondere hinsichtlich der rheologischen und mechanischen Eigenschaften von Dispersions-Parkettklebstoffen mit sich bringen, können unterschiedliche Ursachen haben. In klassischen Dispersions-Parkettklebstoffen werden insbesondere die rheologischen und mechanischen Eigenschaften signifikant durch die Wechselwirkungen der polymeren Bindemittel (in der Regel Vinylacetat-Copolymere) mit den mineralischen Füllstoffen (überwiegend Calciumcarbonat) bestimmt. Dabei haben mineralische Füllstoffe typischerweise einen mittleren Partikeldurchmesser von 0,02 µm bis 70 µm. Leichtfüllstoffe weisen als Hohlkörper einen mittleren Partikeldurchmesser von typischerweise 50 µm bis 200 µm auf. Die Teilchengrößenverteilung von Leichtfüllstoffen enthält Anteile bis zu einem Teilchendurchmesser von ca. 500 µm. Die deutlich größeren Teilchen der Leichtfüllstoffe verschlechtern die rheologischen und mechanischen Eigenschaften der Dispersions-Parkettklebstoffe signifikant. Dazu kommt, dass Leichtfüllstoffe auf Basis der ansonsten hauptsächlich verwendeten Calciumcarbonate nicht verfügbar sind. Weitere Nachteile können von beschädigten Hohlkörpern und deren Bruchstücken, Verformungen und Diffusionseffekten in die Hohlräume ausgehen. Da die Hohlkörper anfällig für Beschädigungen sind, ist auch der Herstellungsaufwand der Dispersions-Parkettklebstoffe mit Leichtfüllstoffen größer als der mit klassischen mineralischen Füllstoffen. So müssen Leichtfüllstoffe beispielsweise unter reduzierten Scherkräften in die Dispersion eingearbeitet werden.

Ausgehend von diesem Stand der Technik besteht die Aufgabe der vorliegenden Erfindung darin, einen Dispersions-Parkettklebstoff mit geringer Dichte, guten Verarbeitungseigenschaften, geeigneten mechanischen Eigenschaften und einer geeigneten offenen Zeit zur Verfügung zu stellen.

Eine weitere Aufgabe der Erfindung besteht darin, ein Verfahren zur Herstellung des erfindungsgemäßen Dispersions-Parkettklebstoffs und dessen Verwendung zur Klebung von Parkett, Holzpflaster, Bambus- und anderen Bodenbelägen auf Basis von Holzwerkstoffen auf im Innenausbau üblichen Untergründen unter den für den Dispersions-Parkettklebstoff angegebenen Zielsetzungen zur Verfügung zur stellen.

Vorteilhafterweise soll ein Dispersions-Parkettklebstoff zur Verfügung gestellt werden, der alle oder mehrere der folgenden Vorteile aufweist: Er soll eine Dichte von ≤ 1,1 g/cm³ besitzen, leichte Verstreichbarkeit und einen stabilen Rippenstand gewährleisten, eine pseudoplastische Rheologie mit geeigneter Verarbeitungsviskosität besitzen sowie eine offene Zeit von mindestens 20 Minuten gewährleisten. Zudem soll er die Mindestanforderungen der Industrienorm für Parkettklebstoffe gemäß DIN EN ISO 17178:2020-06 bezüglich Zugscherfestigkeit und Gleitung erfüllen.

Diese Aufgabe wird überraschenderweise gelöst durch einen Dispersions-Parkettklebstoff gemäß Anspruch 1, dessen Herstellung gemäß Anspruch 13 sowie dessen Verwendung gemäß Anspruch 15. Vorteilhafte Weiterbildungen des erfindungsgemäßen Parkettklebstoffs sind in den jeweiligen abhängigen Ansprüchen beschrieben.

Die Zusammensetzung des erfindungsgemäßen Dispersions-Parkettklebstoffs beruht auf einer spezifischen Komposition aus mindestens drei polymeren Bindemitteln. Das Massenverhältnis der Summe dieser Polymere zu Wasser ist für einen Dispersions-Parkettklebstoff außergewöhnlich hoch. Es liegt bei 1,5 : 1 bis 3 : 1, bevorzugterweise bei 1,6 : 1 bis 2,7 : 1. Besonders bevorzugt sind 1,7 : 1 bis 2,6 : 1. Demzufolge steht einer polymeren Masseneinheit im Durchschnitt weniger als eine halbe Masseneinheit Wasser zur Verfügung. Dies ist ein erheblicher Unterschied zum Stand der Technik, bei dem Dispersions-Parkettklebstoffe Verhältnisse von polymerem Bindemittel zu Wasser von ungefähr 0,6 : 1 bis 0,9 : 1 aufweisen. Einer polymeren Masseneinheit steht hier mehr als eine Masseneinheit Wasser gegenüber.

Zur erfindungsgemäßen Herstellung des erfindungsgemäßen Dispersions-Parkettklebstoffs gemäß Anspruch 13 ist es im Unterschied zu konventionellen Dispersions-Parkettklebstoffen erforderlich, zu einer bereits bestehenden konzentrierten Polymerdispersion/Polymerlösung weiteres polymeres Bindemittel als Feststoff in Form eines in Wasser dispergierbaren Dispersionspulvers zuzumischen.

Eine weitere Abgrenzung zu konventionellen Dispersions-Parkettklebstoffen ist der stark limitierte Füllstoffgehalt der erfindungsgemäßen Zusammensetzung. Er beträgt maximal 5 Massenprozent und bevorzugterweise maximal 2 Massenprozent. Besonders bevorzugte Ausführungsformen der erfindungsgemäßen Zusammensetzung sind frei von Füllstoffen. Im Unterschied dazu weisen konventionelle Dispersions-Parkettklebstoffe typischerweise Gehalte an mineralischen Füllstoffen im höheren zweistelligen Prozentbereich auf. Der weitgehende Verzicht auf mineralische Füllstoffe führt zur gewünschten Dichtereduktion des erfindungsgemäßen Dispersions-Parkettklebstoffs. Das Überraschende an der erfindungsgemäßen Zusammensetzung ist jedoch nicht der Effekt der Dichtereduktion, sondern die Tatsache, dass mit einem außergewöhnlich hohen Verhältnis von Polymer zu Wasser bei gleichzeitigem Füllstoffmangel überhaupt eine als Dispersions-Parkettklebstoff verwendungsfähige Zusammensetzung entsteht. Der Fachmann hätte an dieser Stelle eine teilverklumpte verarbeitungsunfreundliche Dispersion mit newtonscher Rheologie, hoher Viskosität, starker holzquellender Wirkung und mangelhaften mechanischen Eigenschaften erwartet. Es wären insbesondere eine zähe Verstreichbarkeit, ein unzureichender Rippenstand und ein zu geringer E-Modul mit daraus resultierender unzureichender Maßhaltigkeit des verklebten Parketts zu erwarten gewesen. Umso überraschender ist, dass die erfindungsgemäße Zusammensetzung nicht nur irgendwie als Dispersions-Parkettklebstoff verwendbar ist, sondern im Vergleich zu konventionellen Dispersions-Parkettklebstoffen völlig unerwartete, außergewöhnlich vorteilhafte Eigenschaften besitzt. Dazu gehört der optimale E-Modul von 10 bis 120 N/mm² (Tab. 2, Zeile XIV), die hohe Zugbruchdehnung von deutlich mehr als 75 N/mm² (Tab. 2, Zeile XIII), die hohe Gleitung nach 3 Tagen und 28 Tagen Aushärtungszeit von deutlich mehr als 1,0 (Tab. 2, Zeilen VIII und XII), die ausgezeichnete pseudoplastische Rheologie mit guter Verstreichbarkeit (Schulnoten 1 bis 2, Tab. 2, Zeile IV), stabilen Klebstoffraupen (Schulnote 1, Tab. 2, Zeile V) und geeignetem Strukturfaktor STF 20/5 von kleiner gleich 0,45 (Tab. 2, Zeile II) und Strukturfaktor STF 20/1 von kleiner gleich 0,17 (Tab. 2, Zeile III) sowie die mehr als deutliche Übererfüllung der Anforderungen an einen Parkettklebstoff gemäß Industrienorm DIN EN ISO 17178:2020-06 bezüglich Zugscherfestigkeit und Gleitung. Die Normvorschrift ist dreigeteilt mit jeweils anderen Anforderungen an einen harten, elastischen und hart-elastischen Parkettklebstoff (Seite 14). Absolut überraschend ist, dass der erfindungsgemäße Dispersions-Parkettklebstoff nicht nur eine der drei Anforderungen erfüllt, sondern alle drei gleichzeitig (Tab. 2, Zeilen VI, VII, VIII sowie X, XI und XII).

Dazu kommt das geringe spezifische Gewicht des erfindungsgemäßen Dispersions-Parkettklebstoffs (Tab.2, Zeile XVIII) mit den sich daraus ergebenden Vorteilen für die Kosten von Lagerhaltung und Logistik sowie die einfachere Handhabung für den Verarbeiter. Um eine bestimmmte Fläche an Parkett zu kleben, ist es für den Verarbeiter z.B. leichter zwei Eimer mit je 11 kg Masse in den dritten Stock zu tragen als zwei Eimer mit je 15 kg.

In seiner besonders bevorzugten Ausführungsform ist der erfindungsgemäße Dispersions-Parkettklebstoff nicht nur frei von Füllstoffen und Leichtfüllstoffen, sondern auch frei von Koaleszenzmitteln, Weichmachern, organischen Lösungsmitteln und anderen sehr leicht- bis sehr schwerflüchtigen organischen Verbindungen. Demzufolge sind besonders bevorzugte Ausführungsformen nicht umwelt- oder gesundheitsgefährdend und gemäß internationalem GHS-Kennzeichnungssystem und der deutschen Gefahrstoffverordnung kennzeichnungsfrei. Darüber hinaus sind sie sehr emissionsarm und erfüllen die Anforderungen der Emicode Klasse EC 1 Plus der Gemeinschaft Emissionskontrollierte Verlegewerkstoffe, Klebstoffe und Bauprodukte e.V., Düsseldorf (GEV).

Ein weiterer zunehmend in den Fokus geratender Aspekt betrifft die Nachhaltigkeit. Besonders bevorzugte Füllstoff- und Leichtfüllstoff-freie Ausführungsformen des erfindungsgemäßen Parkettklebstoffs bilden nach dem Aushärten keinen Verbundwerkstoff, sondern einen homogenen Kunststoff. Dies beinhaltet Vorteile bei der Entsorgung ausgedienten Materials, z.B. in Müllverbrennungsanlagen. So besitzen die aus erfindungsgemäßen Füllstoff-freien Dispersions-Parkettklebstoffen resultierenden Kunststoffe einen höheren Brennwert und ein besseres Abbrennverhalten als die aus herkömmlichen Füllstoff-haltigen Dispersions-Parkettklebstoffen resultierenden Verbundwerkstoffe, die typischerweise zu 60 bis über 70 Massenprozent aus unbrennbaren mineralischen Füllstoffen bestehen. Zudem verbrennen erstere rückstandsfrei, wohingegen letztere einen erheblichen Prozentsatz an Asche verursachen, der wiederum auf separatem Weg entsorgt werden muss. Der füllstofffreie Klebstoff ist nach der Aushärtung ein aus einer Polymermischung bestehender reiner Kunststoff, was zusätzlich erhebliche Vorteile hinsichtlich der Recyclingmöglichkeiten und der Einsatzmöglichkeiten des Recyclats bedeutet. Für erfindungsgemäße Dispersions-Parkettklebstoffe mit geringem Füllstoffgehalt sind die Nachhaltigkeitsvorteile gegenüber herkömmlichen Dispersions-Parkettklebstoffen ebenfalls deutlich, wenn auch etwas geringer ausgeprägt als bei den Füllstoff-freien erfindungsgemäßen Dispersions-Parkettklebstoffen.

Für die Klebung von Parkett, Holzpflaster, Bambus- und anderen Bodenbelägen auf Basis von Holzwerkstoffen auf im Innenausbau übliche Untergründe weist der erfindungsgemäße Dispersions-Parkettklebstoff im Vergleich zu Dispersions-Parkettklebstoffen, die dem Stand der Technik entsprechen, folgende Vorteile auf, wobei die ersten vier für den Fachmann überraschend sind:
1. E-Modul von 10 bis 120 N/mm²
2. Zugbruchdehnung von ≥ 75%
3. Gleichzeitige Erfüllung der Anforderungen an einen harten, hart-elastischen und elastischen Parkettklebstoff aufgrund Zugscherfestigkeit und Gleitung γ nach 3 und 28 Tagen Aushärtungszeit (von mehr als 3,0 N/mm² für gepresste Prüfkörper, bzw. von mehr als 2,0 N/mm² bei 1 mm Dicke der Klebstofffuge sowie einer Gleitung von deutlich mehr als 1,0 bei 1 mm Dicke der Klebstofffuge)
4. Ausgezeichnete pseudoplastische Rheologie mit guter Verstreichbarkeit und stabilen Klebstoffraupen (Schulnoten 1 bis 2,5) bei einer Viskosität von 50.000 bis 200.000 mPa·sund einer ausgeprägten pseudoplastischen Rheologie mit STF 20/5 ≤ 0,45 und STF 20/1 ≤ 0,17.
5. Geringe Dichte von ≤ 1,1 g/cm³
6. Umwelt- und gesundheitsschonend (kein oder geringer Gehalt an sehr leicht- bis sehr schwerflüchtigen organischen Verbindungen)
7. Vorteile bei der thermischen Entsorgung und beim Recycling (kein oder geringer Füllstoffgehalt)
8. Nachhaltig und ressourcenschonend aufgrund Füllstoffeinsparung (energieintensiver Abbau, Reinigung, Vermahlung, Modifizierung, Abfüllung, Lagerung und Transport der Füllstoffe), Dichtereduktion (Lagerhaltung, Logistik und Handhabung der Dispersions-Parkettklebstoffe), Recycling- und Entsorgungsoptionen

Darüber hinaus ist überraschend, dass die holzquellende Wirkung des erfindungsgemäßen Dispersions-Parkettklebstoffs genauso gering ist wie bei herkömmlichen Dispersions-Parkettklebstoffen. Dies war nicht zu erwarten, da der erfindungsgemäße Dispersions-Parkettklebstoff einen höheren absoluten Wassergehalt von ungefähr 33 ± 5 Massenprozent aufweist - im Vergleich zu herkömmlichen Dispersions-Parkettklebstoffen mit rund 25 ± 5 Massenprozent. Die Holzquellung nach Verkleben des Parketts ist mit dem erfindungsgemäßen Dispersions-Parkettklebstoff jedoch genauso gering wie mit konventionellen Dispersions-Parkettklebstoffen und bleibt unterhalb des Grenzwertes von 0,6% Querausdehnung im Holzquellungstest (Tab. 2, Zeile XV).

Auch die Abbindegeschwindigkeit des erfindungsgemäßen Dispersions-Parkettklebstoffs ist langsam genug um schadensbildende Spannungsbelastungen des Untergrunds zu vermeiden. Nach einer Abbindezeit von einer Stunde ist die Zugscherfestigkeit nach DIN EN ISO 17178:2020-06 deutlich kleiner als 0,8 N/mm² (Tab. 2, Zeile XVI).

Weiterhin zeigt der erfindungsgemäße Dispersions-Parkettklebstoff die für die Parkettklebung erforderliche offene Zeit von mindestens 20 Minuten (Tab. 2, Zeile IX). Sie ist nach oben auf ca. 60 Minuten begrenzt.

Auch eine gute Haftung unterschiedlicher Holzbeläge und Holzarten auf unterschiedlichen im Innenausbau üblichen Untergründen ist mit dem erfindungsgemäßen Dispersions-Parkettklebstoff gewährleistet.

Erfindungsgemäß enthält der verarbeitungsfertige wässrige Dispersions-Parkettklebstoff, der zum Kleben von Parkett, Holzpflaster, Bambus- und anderen Bodenbelägen auf Basis von Holzwerkstoffen auf im Innenausbau übliche Untergründe geeignet ist, bis zu 39 Massenprozent Wasser und mindestens folgende drei polymeren Bindemittel oder er besteht aus ihnen:
a) mindestens 4 Massenprozent mindestens eines gelösten Polyvinylalkohols,
b) mindestens 20 Massenprozent mindestens eines wasserunlöslichen dispergierten Vinylacetat-haltigen Polymers und
c) mindestens 3 Massenprozent mindestens eines wasserunlöslichen dispergierten Acrylat-haltigen Polymers, wobei
   - das Massenverhältnis der Summe aller in der Zusammensetzung vorliegenden gelösten und dispergierten polymeren Bindemittel zu Wasser 1,5 : 1 bis 3 : 1 ist und
   - das Massenverhältnis aus der Summe aller in der Zusammensetzung vorliegenden dispergierten polymeren Bindemittel zur Summe aller in der Zusammensetzung vorliegenden gelösten polymeren Bindemittel 3 : 1 bis 15 : 1 ist und
   - maximal 2 Massenprozent sehr leicht bis sehr schwer flüchtige organische Verbindungen (inkl. Koaleszenzmittel, Weichmacher und organische Lösungsmittel) und
   - maximal 5 Massenprozent Füllstoffe (einschließlich Leichtfüllstoffe) enthalten sind und
   - der pH-Wert neutral oder alkalisch eingestellt ist und
die Summe aus Wasser, Füllstoffen, sehr leicht- bis sehr schwerflüchtigen organischen Verbindungen, pH-Einstellungsagenzien und der polymeren Bindemittel (a) bis (c) kleiner oder gleich 100% ist.

Bevorzugterweise enthält der verarbeitungsfertige erfindungsgemäße wässrige Dispersions-Parkettklebstoff 27 bis 39 Massenprozent Wasser und mindestens folgende drei polymeren Bindemittel oder er besteht aus ihnen:
a) 4 bis 16 Massenprozent mindestens eines gelösten Polyvinylalkohols,
b) 20 bis 65 Massenprozent mindestens eines wasserunlöslichen dispergierten Vinylacetat-Copolymers und
c) 3 bis 33 Massenprozent mindestens eines wasserunlöslichen dispergierten Acrylat-Copolymers, wobei
   - das Massenverhältnis der Summe aller in der Zusammensetzung vorliegenden gelösten und dispergierten polymeren Bindemittel zu Wasser 1,6 : 1 bis 2,7 : 1 ist und
   - das Massenverhältnis aus der Summe aller in der Zusammensetzung vorliegenden dispergierten polymeren Bindemittel zur Summe aller in der Zusammensetzung vorliegenden gelösten polymeren Bindemittel 4 : 1 bis 14 : 1 ist und
   - maximal 0,5 Massenprozent sehr leicht- bis sehr schwerflüchtige organische Verbindungen (inkl. Koaleszenzmittel, Weichmacher und organische Lösungsmittel) und
   - maximal 2 Massenprozent Füllstoffe (inkl. Leichtfüllstoffe) enthalten sind und
   - der pH-Wert auf 7,0 bis 9,5 eingestellt ist und
die Summe aus Wasser, Füllstoffen, sehr leicht- bis sehr schwerflüchtigen organischen Verbindungen, pH-Einstellungsagenzien und der polymeren Bindemittel (a) bis (c) kleiner oder gleich 100% ist.

Der erfindungsgemäße wässrige Dispersions-Parkettklebstoff enthält bis zu 39 Massenprozent Wasser, bevorzugterweise 27 bis 39 Massenprozent. Besonders bevorzugt sind 28 bis 38 Massenprozent.

Bei der Herstellung des erfindungsgemäßen Dispersionsparkettklebstoffs kommt das Wasser i.d.R. vollständig aus den zugegebenen Rohstoff-Dispersionen und Stammlösungen. Vorzugsweise wird Wasser nicht gesondert zugegeben.

Der im erfindungsgemäßen Dispersions-Parkettklebstoff als Bindemittel und Schutzkolloid enthaltene Polyvinylalkohol (a) liegt in gelöster Form vor und ist in einer Menge von mindestens 4 Massenprozent, vorzugsweise 4 bis 16 Massenprozent enthalten. Besonders bevorzugt sind 5 bis 14 Massenprozent. Vorzugsweise handelt es sich dabei um mindestens einen Polyvinylalkohol mit einem Hydrolysegrad von 82 bis 96 Molprozent. Besonders bevorzugt sind 83 bis 91 Molprozent. Vorzugsweise liegt das massenmittlere Molekulargewicht Mw im Bereich von 10.000 g/mol bis 200.000 g/mol. Besonders bevorzugt sind massenmittlere Molekulargewichte Mw im Bereich von 10.000 g/mol bis 120.000 g/mol.

Bei der Herstellung des erfindungsgemäßen Dispersions-Parkettklebstoffs wird der mindestens eine gelöste Polyvinylalkohol (a) als mindestens eine wässrige Lösung, in fester Form als Bestandteil mindestens eines in Wasser dispergierbaren Dispersionspulvers des Vinylacetat-haltigen Polymers (b) und/oder als Bestandteil mindestens einer wässrigen Dispersion des Vinylacetat-haltigen Polymers (b) der Formulierung zugegeben bzw. vorgelegt. Bevorzugterweise wird der Polyvinylalkohol als mindestens eine wässrige Lösung und als Bestandteil mindestens eines in Wasser dispergierbaren Dispersionspulvers des Vinylacetat-haltigen Polymers (b) der Formulierung zugemischt. Besonders bevorzugt ist die Zugabe des Polyvinylalkohols als mindestens eine wässrige Lösung, als Bestandteil mindestens eines in Wasser dispergierbaren Dispersionspulvers des Vinylacetat-haltigen Polymers (b) und als Bestandteil mindestens einer wässrigen Dispersion des Vinylacetat-haltigen Polymers (b). Vorzugsweise enthält die wässrige PVOH-Lösung 27 bis 37 Massenprozent, das in Wasser dispergierbare Dispersionspulver des Vinylacetat-haltigen Polymers (b) 6 bis 16 Massenprozent und die wässrige Dispersion des Vinylacetat-haltigen Polymers (b) 1 bis 5 Massenprozent Polyvinylalkohol.

Das im erfindungsgemäßen Dispersions-Parkettklebstoff als Bindemittel enthaltene mindestens eine Vinylacetat-haltige Polymer (b) ist wasserunlöslich und liegt in dispergierter Form vor. Es ist in einer Menge von mindestens 20 Massenprozent, vorzugsweise 20 bis 65 Massenprozent enthalten. Besonders bevorzugt sind 26 bis 62 Massenprozent. Es handelt sich dabei bevorzugterweise um mindestens ein Polyvinylacetat, mindestens ein Vinylacetat-Copolymer oder um eine Mischung dieser Polymere. Besonders bevorzugt sind Vinylacetat-Copolymere. Vorzugsweise beträgt der Co-Monomeranteil 5 bis 40 Massenprozent. Besonders bevorzugt sind 10 bis 20 Massenprozent. Bevorzugte Co-Monomere sind Ethylen, Crotonsäure, Vinylchlorid und Ester des Vinylalkohols mit 3 bis 6 Kohlenstoffatomen in der Carbonsäurekomponente. Ethylen ist ein besonders bevorzugtes Co-Monomer. Bevorzugterweise liegt die Glasübergangstemperatur des Vinylacetat-haltigen Polymers im Bereich von -8°C bis 14°C und besonders bevorzugt im Bereich von -4°C bis 10°C.

Bei der Herstellung des erfindungsgemäßen Dispersions-Parkettklebstoffs wird vorteilhafterweise das mindestens eine wasserunlösliche dispergierte Vinylacetat-haltige Polymer (b) in fester Form als mindestens ein in Wasser dispergierbares Dispersionspulver und/oder als mindestens eine wässrige Dispersion der Formulierung zugemischt. Bevorzugterweise wird das mindestens eine Vinylacetat-haltige Polymer als mindestens ein in Wasser dispergierbares Dispersionspulver der Formulierung zugegeben. Besonders bevorzugt ist die Zumischung als mindestens ein in Wasser dispergierbares Dispersionspulver und als mindestens eine wässrige Dispersion. Vorzugsweise enthält die wässrige Dispersion 50 bis 65 Massenprozent und das Dispersionspulver 84 bis 94 Massenprozent Vinylacetat-haltiges Polymer.

Das im erfindungsgemäßen Dispersions-Parkettklebstoff als Bindemittel enthaltene Acryat-haltige Polymer (c) ist wasserunlöslich und liegt in dispergierter Form vor. Es ist in einer Menge von mindestens 3 Massenprozent, vorzugsweise 3 bis 33 Massenprozent enthalten. Besonders bevorzugt sind 4 bis 32 Massenprozent. Es handelt sich dabei vorzugsweise um mindestens ein Polyacrylat, mindestens ein Acrylat-Copolymer oder um eine Mischung dieser Polymere. Besonders bevorzugt sind Acrylat-Copolymere. Vorzugsweise beträgt der Co-Monomeranteil 15 bis 40 Massenprozent; besonders bevorzugt sind 20 bis 35 Massenprozent. Bevorzugte Co-Monomere sind Styrol, Butadien, Acrylnitril und Vinylacetat, wobei Styrol ein besonders bevorzugtes Co-Monomer ist. Vorzugsweise liegt die Glasübergangstemperatur des Acrylat-haltigen Polymers im Bereich von -7°C bis 17°C. Besonders bevorzugt ist der Bereich von -2°C bis 12°C.

Bei der Herstellung des erfindungsgemäßen Dispersions-Parkettklebstoffs wird das mindestens eine wasserunlösliche dispergierte Acrylat-haltige Polymer (c) als mindestens eine wässrige Dispersion und/oder in fester Form als mindestens ein in Wasser dispergierbares Dispersionspulver der Formulierung zugemischt. Bevorzugterweise wird das mindestens eine Acrylat-haltige Polymer als mindestens eine wässrige Dispersion mit einem Feststoffgehalt von vorzugsweise 45 bis 60 Massenprozent der Formulierung zugemischt.

Der erfindungsgemäße Dispersions-Parkettklebstoff kann weitere polymere Bindemittel wie Methylhydroxyethylcellulose, weitere modifizierte oder unmodifizierte Kohlenhydrate oder auch andere natürliche oder synthetische wasserlösliche oder in Wasser dispergierbare Polymere enthalten.

Um einen funktionellen Dispersions-Parkettklebstoff gemäß dem unter der Aufgabe der Erfindung definierten Anforderungsprofil zu erhalten, muss das Massenverhältnis aus der Summe aller in der Zusammensetzung vorliegenden gelösten und dispergierten polymeren Bindemittel zu Wasser 1,5 : 1 bis 3,0 : 1, vorzugsweise 1,6 : 1 bis 2,7 : 1 sein. Besonders bevorzugt sind 1,7 : 1 bis 2,6 : 1.

Weiterhin muss das Massenverhältnis aus der Summe aller in der Zusammensetzung vorliegenden dispergierten polymeren Bindemittel zur Summe aller in der Zusammensetzung vorliegenden gelösten polymeren Bindemittel 3 : 1 bis 15 : 1, vorzugsweise 4 : 1 bis 14 : 1 sein.

Der erfindungsgemäße Dispersions-Parkettklebstoff kann bis zu drei Massenprozent, vorzugsweise bis zu einem Massenprozent sehr leichtflüchtige bis sehr schwerflüchtige organische Verbindungen enthalten. Besonders bervorzugte Ausführungsformen enthalten keine sehr leicht- bis sehr schwerflüchtigen organischen Verbindungen. Die organischen Verbindungen können u.a. Weichmacher, Koaleszenzmittel oder organische Lösungsmittel sein.

Als Weichmacher können u.a. Phthalate wie Diethylhexylphthalat, aliphatische cyclische Carbonsäureester, aliphatische cyclische Dicarbonsäureester wie 1,2-Cyclohexandicarbonsäurediisononylester (Hexamoll DINCH), Alkylsulfonsäurephenylester und Alkyldisulfonsäurediphenylester wie Mesamoll und Mesamoll II oder Dipropylenglycoldibenzoat und andere Propylenglycol- und Ethylenglycolderivate eingesetzt werden.

Koaleszenzmittel können u.a. Ether und Polyetherpolyole wie Ethylenglycolmonobutylether (Butylglycol), Dipropylenglycolmethylether, Propylenglycolphenylether, Diproylenglycoldiphenylether oder Esteralkohole wie Butyldiglycolacetat oder 2,2,4-Trimethyl-1,3-pentandiolmono-isobutyrat (Texanol) sein.

Organische Lösungsmittel können u.a. Alkane wie n-Pentan n-Hexan oder Cyclohexan, halogenierte Alkane wie Tetrachlorkohlenstoff, Methylenchlorid, Chloroform oder Perchlorethylen (Per), Alkohole wie Methanol, Ethanol, Isopropanol, 1-Butanol, Ethylenglycol oder Glycerol, Ether wie Diethylether, Dibutylether, Butylmethylether, Phenylmethylether, Tetrahydrofuran, Triethylenglycol oder Triethylenglycoldimethylether (Triglyme), Carbonsäuren wie Ameisensäure, Propionsäure oder Linolsäure, Ketone wie Aceton oder Methylethylketon, Nitrile wie Acetonitril oder Benzonitril, Carbonsäureester wie Methylacetat oder Ethylacetat, Lactone wie γ-Butyrolacton, Lactame wie N-Methyl-2-pyrrolidon, aromatische Verbindungen wie Benzol, Toluol, Pyridin oder Anisol, Nitroverbindungen wie Nitromethan oder Nitrobenzol, Sulfone wie Sulfolan, Sulfoxide wie Dimethysulfoxid (DMSO), Schwefelkohlenstoff, Carbonsäureamide wie Dimethylformamid, Harnstoffderivate wie Dimethylpropylenharnstoff (DMPU), Kohlensäureester wie Dimethylcarbonat, Amine wie Triethylamin, Piperidin oder Anilin oder Stoffgemische wie Benzin, Petroleum oder Petrolether sein.

Ferner kann der erfindungsgemäße wässrige Dispersions-Parkettklebstoff bis zu fünf Massenprozent, vorzugsweise bis zu zwei Massenprozent Füllstoffe und/oder Leichtfüllstoffe enthalten. Besonders bevorzugte Ausführungsformen enthalten keine Füllstoffe oder Leichtfüllstoffe. Die Füllstoffe können anorganischer Natur sein wie u.a. Kreide, Marmor, Kalkstein oder gefällte Calciumcarbonate, Kaolin, Wollastonit, Bariumsulfat, Silikate, pyrogene oder gefällte Kieselsäuren, Aluminate, Alumosilikate, Sulfate, Sulfide, Nitrate, Nitride, Phosphate, Phosphide, Ferrate, Manganate, Molybdate, Carbide oder Titanate. Sie können organischer Natur sein wie u.a. Cellulose, Ruß, Graphit, Graphen, Kohlenstoff-Nanoröhrchen (CNTs, carbon nanotubes), Duroplaste wie Bakelit, Elastomere wie Gummi oder textiles Material aus natürlichen oder synthetischen Fasern. Oder es sind Leichtfüllstoffe wie u.a. Expancel^{®} oder andere mikroskopische Hohlkörper, geblähter Perlit^{®}, Bims oder anderes Leichtgestein, Kork oder andere poröse natürliche oder synthetische Stoffe. Darüber hinaus kann es sich auch um Mischungen dieser Füllstoffe und/oder Leichtfüllstoffe handeln. Die Füllstoffpartikel können zudem modifiziert, z.B. silanisiert oder mittels Fettsäuren oberflächenhydrophobiert sein.

Der erfindungsgemäße Dispersions-Parkettklebstoff weist einen pH-Wert von ≥ 7,0, vorzugsweise von 7,0 bis 9,5 auf. Besonders bevorzugt sind pH-Werte zwischen 7,5 und 8,5. Zur Einstellung des pH-Wertes kann der erfindungsgemäße Dispersions-Parkettklebstoff organische oder anorganische Säuren und/oder Basen enthalten, wobei Natronlauge zur Alkalisierung und Salzsäure zur Ansäuerung bevorzugt sind.

Weiterhin kann der erfindungsgemäße wässrige Dispersions-Parkettklebstoff Verdickungsmittel enthalten. Diese können assoziativ oder nicht-assoziativ sein.

Bevorzugt sind nicht-assoziative Verdickungsmittel wie wasserlösliche Acrylat-haltige Polymere. Besonders bevorzugt sind wasserlösliche Acrylat-Carbonsäure-Copolymere mit ethylenisch ungesättigten Carbonsäuren, die Glasübergangstemperaturen im Bereich von 10°C bis 45°C, bevorzugterweise von 15°C bis 40°C und besonders bevorzugt von 22°C bis 33°C besitzen.

Desweiteren kann der erfindungsgemäße Dispersions-Parkettklebstoff Konservierungsmittel enthalten. Dies kann u.a. 5-Chlor-2-methyl-4-isothiazolin-3-on, 2-Methyl-2H-isothiazol-3-on, 2-Brom-2-nitropropan-1,3-diol, 1,2-Benzisothiazol-3-on, 2-Octyl-2H-isothiazol-3-on, Bis-(3-aminopropyl)dodecylamin, Butylbenzoisothiazol-3-on, Natriumpyrithion, Zinkpyrithion, Ethylendioxydimethanol, Tetramethylolacetylendiharnstoff, Dodecylguanidinhydrochlorid, 3-Jod-2-propinylbutylcarbamat, Tetrahydro-1,3,4,6-tetrakis(hydroxymethyl)imidazo[4,5-d]imidazol-2,5(1H,3H)-dion, 2-t-Butylamino-4-ethylamino-6-methylthio-s-triazin, N-(Benzimidazol-2-yl)carbamidsäuremethylester, 3-(3,4-Dichlorphenyl)-1,1-dimethylharnstoff, 4,5-Dichlor-2-octyl(2H)-isothiazolin-3-on, Glutaraldehyd, 2,2-Dibrom-2-cyanacetamid oder eine Mischung dieser Verbindungen sein. Bevorzugt sind 5-Chlor-2-methyl-4-isothiazolin-3-on, 2-Methyl-2H-isothiazol-3-on und 2-Brom-2-nitropropan-1,3-diol.

Ferner kann der erfindungsgemäße Dispersions-Parkettklebstoff Entschäumer enthalten. Dies können u.a. flüssige Kohlenwasserstoffe, Mineralölemulsionen, Fettsäurepolyether, Organopolysiloxane, hydrophob-hydrophile Block-Copolymere, Polyether-modifizierte Poylsiloxane, 5-Dimethylamino-2-methyl-5-oxo-pentansäuremethylester und/oder Triisobutylphosphat sein. Bevorzugt sind flüssige Kohlenwasserstoffe und Polyether-modifizierte Polysiloxane, wobei Polyether-modifizierte Polysiloxane besonders bevorzugt sind.

Weiterhin kann der erfindungsgemäße Dispersions-Parkettklebstoff Dispergieradditive enthalten. Dies können u.a. Polycarbonsäure-Copolymere, Polyphosphate, Polyalkylenglykolphosphate, modifizierte Polyurethane, Arylalkylpolyether, Polyglykolester und/oder Polyacrylate sein. Polyacrylate und Polyphosphate sind bevorzugt, wobei Natriumpolyacrylat besonders bevorzugt ist.

Der erfindungsgemäße Dispersions-Parkettklebstoff kann zudem oberflächenaktive Substanzen enthalten. Dies können u.a. Fettsäureethoxylate, Ricinusölethoxylate, Fettalkoholethoxylate, Alkylphenolethoxylate, Alkylsulfosuccinate, Organopolysiloxane, Polyetherpolysiloxane, Fluorierte Polyacrylate, Ethylenoxid-Propylenoxid-Blockcopolymere und/oder Fettalkoholpolyglykolethersulfate sein. Bevorzugt sind Fettalkoholpolyglycolethersulfate und ethoxyliertes Ricinusöl. Besonders bevorzugt sind Natriumsalze von Fettalkoholpolyglycolethersulfaten.

Darüber hinaus kann der erfindungsgemäße Dispersions-Parkettklebstoff Haftvermittler, rheologische Additive, Pigmente, Harze, Wachse, Flüssig-Extender, Antioxidantien, UV-Licht-Absorber, Farbstoffe und/oder weitere Schutzkolloide (zusätzlich zu PVOH) enthalten.

Erfüllt ein Zusatzstoff, z.B. ein Dispergieradditiv oder ein Verdickungsmittel, die allgemeinen Anforderungen an ein polymeres Bindemittel (Beteiligung am Haftungsaufbau, Mw ≥ 10.000 g/mol, wasserlöslich oder in Wasser dispergierbar), wird er in die Berechnung der Quotienten (I) und (K) (Mittelteil Tabelle 2) an entsprechender Stelle einbezogen. Erfüllt er auch die speziellen Anforderungen an eines der polymeren Bindemittel (a), (b) oder (c), wird er dem jeweils zutreffenden zugerechnet.

Aus den obigen Komponenten kann der erfindungsgemäße Dispersions-Parkettklebstoff folgendermaßen hergestellt werden (Verfahren A):
- In einem ersten Schritt wird ggf. Wasser und ggf. eine wässrige Lösung des mindestens einen Polyvinylalkohols (a) mit einer wässrigen Dispersion des mindestens einen Acrylat-haltigen Polymers (c) und einer wässrigen Dispersion aus 0 bis 90 Massenprozent der insgesamt zuzugebenden Masse des mindestens einen Vinylacetat-haltigen Polymers (b) bis zur Homogenisierung vermischt und
- in einem zweiten Schritt wird dieser Mischung das mindestens eine Vinylacetat-haltige Polymer (b) in Form mindestens eines in Wasser dispergierbaren Dispersionspulvers bis zur Erreichung der Endkonzentration des mindestens einen Vinylacetat-haltigen Polymers (b) unter Rühren zugemischt und bis zur Homogenisierung weitergerührt und
- in einem ggf. nachfolgenden Schritt werden alle weiteren Bestandteile des wässrigen Dispersions-Parkettklebstoffs, wie pH-Einstellungsagenzien, Dispergieradditive und/oder Entschäumer, unter Rühren zugemischt und
- in einem letzten Schritt wird die Mischung bis zur Homogenisierung weitergerührt, der pH-Wert überprüft und ggf. nachgestellt.

Das Herstellungsverfahren weist vorteilhafterweise die Besonderheit auf, dass das Vinylacetat-haltige Polymer (b) ganz oder teilweise als Feststoff (Dispersionspulver) einer Vorlage zugemischt wird, die bereits aus einer mit polymerem Bindemittel angereicherten Dispersion oder Lösung und Dispersion besteht. Auf diese Weise ist es überhaupt erst möglich, das im Vergleich zu konventionellen Dispersions-Parkettklebstoffen ungewöhnlich hohe Verhältnis von polymerem Bindemittel zu Wasser einzustellen.

Ähnlich verläuft das Herstellungsverfahren, wenn vorteilhafterweise das Acrylat-haltige polymere Bindemittel (c) als Dispersionspulver ganz oder teilweise der Vorlage zugemischt wird (Verfahren B):
- In einem ersten Schritt wird ggf. Wasser und eine wässrige Lösung des mindestens einen Polyvinylalkohols (a) mit einer wässrigen Dispersion des mindestens einen Vinylacetat-haltigen Polymers (b) und einer wässrigen Dispersion aus 0 bis 90 Massenprozent der insgesamt zuzugebenden Masse des mindestens einen Acrylat-haltigen Polymers (c) bis zur Homogenisierung vermischt und
- in einem zweiten Schritt wird dieser Mischung das mindestens eine Acrylat-haltige Polymer (c) in Form mindestens eines in Wasser dispergierbaren Dispersionspulvers bis zur Erreichung der Endkonzentration des mindestens einen Acrylat-haltigen Polymers (c) unter Rühren zugemischt und bis zur Homogenisierung weitergerührt und
- in einem ggf. nachfolgenden Schritt werden alle weiteren Bestandteile des wässrigen Dispersions-Parkettklebstoffs, wie pH-Einstellungsagenzien, Dispergieradditive und/oder Entschäumer, unter Rühren zugemischt und
- in einem letzten Schritt wird die Mischung bis zur Homogenisierung weitergerührt, der pH-Wert überprüft und ggf. nachgestellt.

Selbstverständlich ist auch eine Kombination der beiden Herstellungsverfahren möglich, wobei ein Teil oder das gesamte Vinylacetat-haltige polymere Bindemittel (b) und ein Teil oder das gesamte Acrylat-haltige polymere Bindemittel (c) als Dispersionspulver gemeinsam oder nacheinander der Vorlage aus ggf. Wasser, ggf. gelöstem Polyvinylalkohol (a) und dispergiertem polymerem Bindemittel (b) und/oder (c) unter Rühren zugegeben wird (Verfahren C).

Die drei Herstellungsverfahren sind dadurch gekennzeichnet, dass die mindestens eine wässrige Dispersion des mindestens einen Vinylacetat-haltigen Polymers (b) und das mindestens eine in Wasser dispergierbare Dispersionspulver des mindestens einen Vinylacetat-haltigen Polymers (b) zusätzlich zum Vinylacetat-haltigen Polymer auch Polyvinylalkohol (Polymer a) enthalten.

Nachfolgend werden mit obigen Komponenten gemäß dem beschriebenen Herstellungsverfahren (A) hergestellte Ausführungsformen des erfindungsgemäßen wässrigen Dispersions-Parkettklebstoffs (Erf.1 bis Erf.4) mit nicht erfindungsgemäßen Referenzbeispielen (Ref.1 bis Ref.3) verglichen (Tabellen 1 und 2).

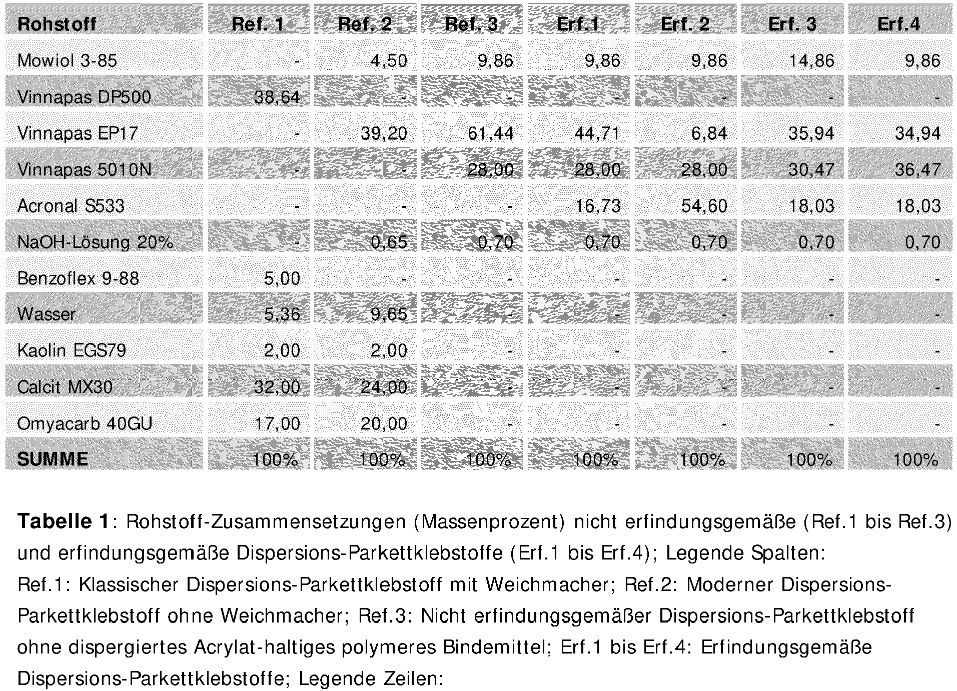

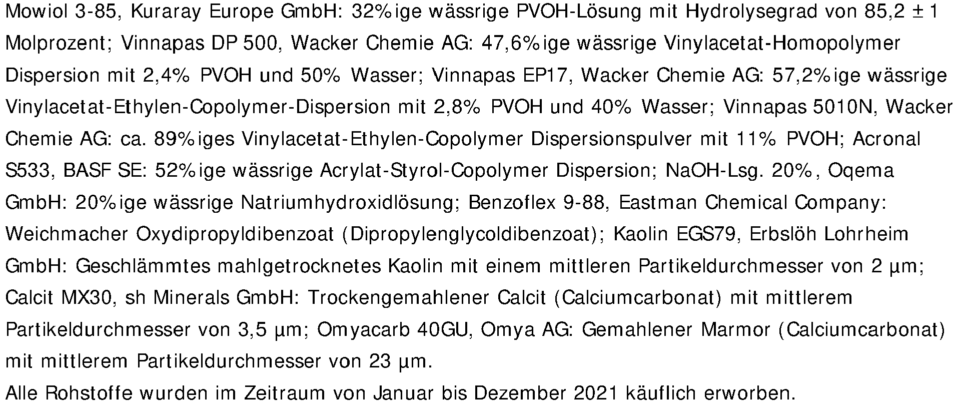

Ref.1 stellt die Zusammensetzung eines klassischen Dispersions-Parkettklebstoffs mit Vinylacetat-Homopolymer-Dispersion, mineralischen Füllstoffen und Weichmacher und Ref.2 die Zusammensetzung eines aktuellen dem Stand der Technik entsprechenden Dispersions-Parkettklebstoffs ohne Weichmacher mit mineralischen Füllstoffen, Polyvinylalkohol und Vinylacetat-Ethylen-Copolymer-Dispersion dar. Vergleichsbeispiel 3 (Ref.3) entspricht bis auf das fehlende Acrylat-haltige Polymer den erfindungsgemäßen Dispersions-Parkettklebstoffen.

Referenzbeispiel 3 wurde ebenso wie die erfindungsgemäßen Beispiele Erf.1 bis Erf.4 gemäß Herstellungsverfahren (A) hergestellt.

Referenzbeispiel 1 wurde gemäß der Bestandteile aus Tabelle 1 hergestellt indem
- in einem ersten Schritt Wasser mit der wässrigen Vinylacetat-Homopolymer-Dispersion Vinnapas DP500 (Wacker Chemie AG) bis zur Homogenisierung vermischt wurde und
- in einem zweiten Schritt der Weichmacher Benzoflex 9-88 (Eastman Chemical Company) unter Rühren zugegeben und bis zur Homogenisierung vermischt wurde und
- in einem dritten Schritt die Füllstoffe Kaolin EGS79 (Erbslöh Lohrheim GmbH), Calcit MX30 (sh Minerals GmbH) und Omyacarb 40GU (Omya AG) unter Rühren zugegeben und bis zur Homogenisierung vermischt wurden und
- in einem letzten Schritt der pH-Wert überprüft und als gut beurteilt wurde.

Referenzbeispiel 2 wurde gemäß der Bestandteile aus Tabelle 1 hergestellt indem
- in einem ersten Schritt Wasser mit der Polyvinylalkohol-Lösung Mowiol 3-85 (Kuraray Europe GmbH) und der wässrigen Vinylacetat-Copolymer-Dispersion Vinnapas EP17 (Wacker Chemie AG) bis zur Homogenisierung vermischt wurde und
- in einem zweiten Schritt die Natriumhydroxidlösung (Oqema GmbH) unter Rühren zugegeben und bis zur Homogenisierung vermischt wurde und
- in einem dritten Schritt die Füllstoffe Kaolin EGS79 (Erbslöh Lohrheim GmbH), Calcit MX30 (sh Minerals GmbH) und Omyacarb 40GU (Omya AG) unter Rühren zugegeben und bis zur Homogenisierung vermischt wurden und
- in einem letzten Schritt der pH-Wert überprüft und als gut eingestellt beurteilt wurde.

Tabelle 1 zeigt die Zusammensetzungen der formulierten Dispersions-Parkettklebstoffe Ref.1 bis Ref.3 und Erf.1 bis Erf.4 in Massenprozent sowie Art, Name, Hersteller und Zusammensetzung der verwendeten Rohstoffe (Legende). Ref.1 ist dabei ein klassischer Dispersions-Parkettklebstoff mit Vinylacetat-Homopolymer, mineralischen Füllstoffen und Weichmacher. Ref.2 ist ein moderner dem Stand der Technik entsprechender Dispersions-Parkettklebstoff ohne Weichmacher mit mineralischen Füllstoffen, Polyvinylalkohol und Vinylacetat-Ethylen-Copolymer. Ref.3 ist ein nicht erfindungsgemäßer füllstofffreier Dispersions-Parkettklebstoff mit Polyvinylalkohol, Vinylacetat-Ethylen-Copolymer, erfindungsgemäßem Verhältnis von polymeren Bindemitteln zu Wasser, erfindungsgemäßem Verhältnis von dispergierten polymeren Bindemitteln zu gelösten polymeren Bindemitteln, jedoch ohne Acrylat-haltiges polymeres Bindemittel. Erf.1 bis Erf.4 sind erfindungsgemäße Dispersions-Parkettklebstoffe mit Polyvinylalkohol, Vinylacetat-Ethylen-Copolymer, Acrylat-Styrol-Copolymer, erfindungsgemäßen Verhältnissen von polymeren Bindemitteln zu Wasser und erfindungsgemäßen Verhältnissen von dispergierten polymeren Bindemitteln zu gelösten polymeren Bindemitteln.

Ein Rohstoff kann mehrere Inhaltsstoffe enthalten. So enthält Vinnapas DP500 (Wacker Chemie AG) z.B. Wasser, Polyvinylalkohol und Vinylacetat-Homopolymer. Um einen Überblick über die Zusammensetzung der eigentlichen Inhaltsstoffe zu erhalten, ist es daher erforderlich diese aus der Zusammensetzung der Rohstoffe und deren eingesetzten Mengen zu berechnen. Das Ergebnis ist in Tabelle 2, (A) bis (H) dargestellt. Ref.1 bis Ref.3 und Erf.1 bis Erf.4 entsprechen der Beschreibung von Tabelle 1.

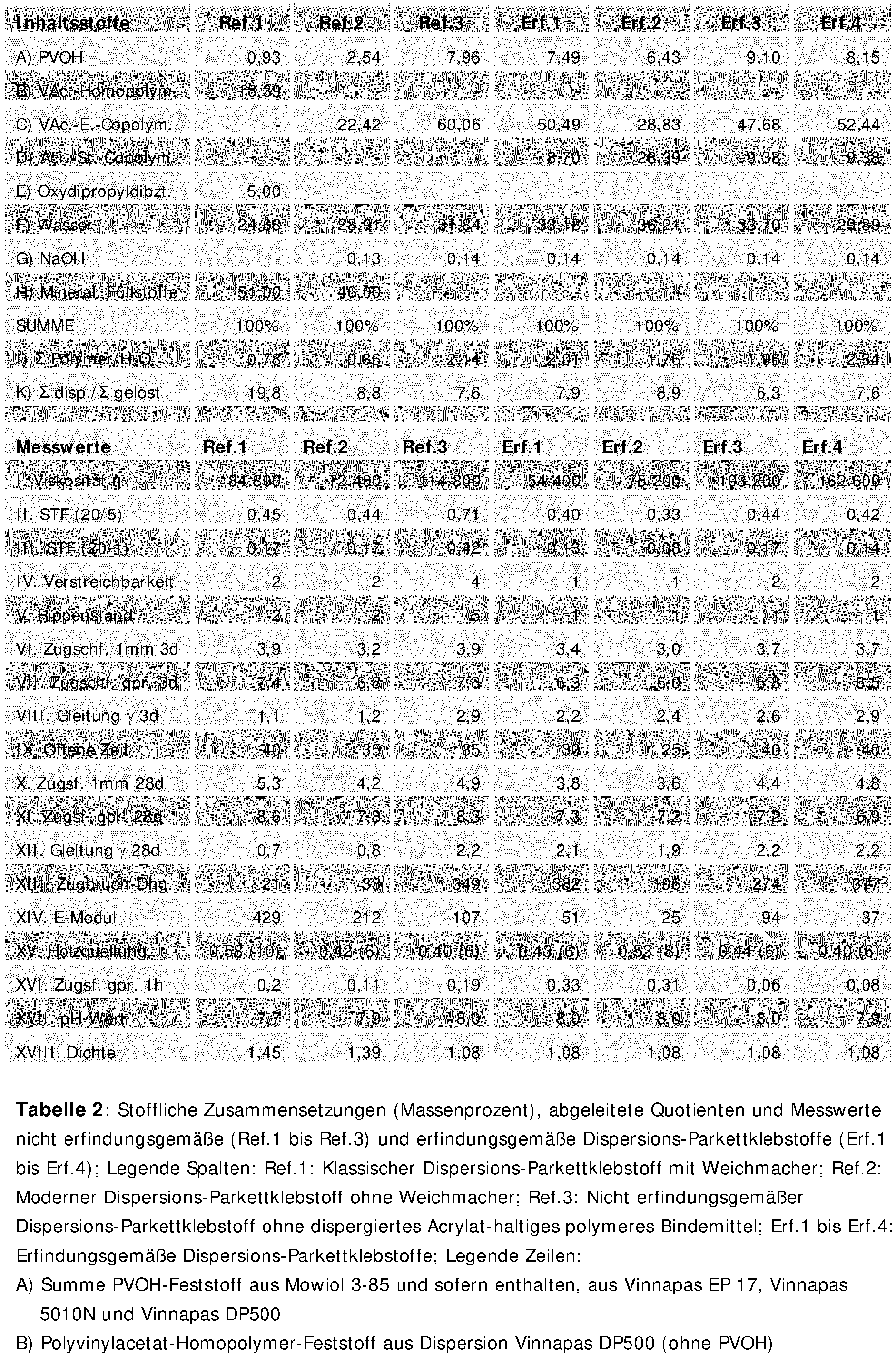

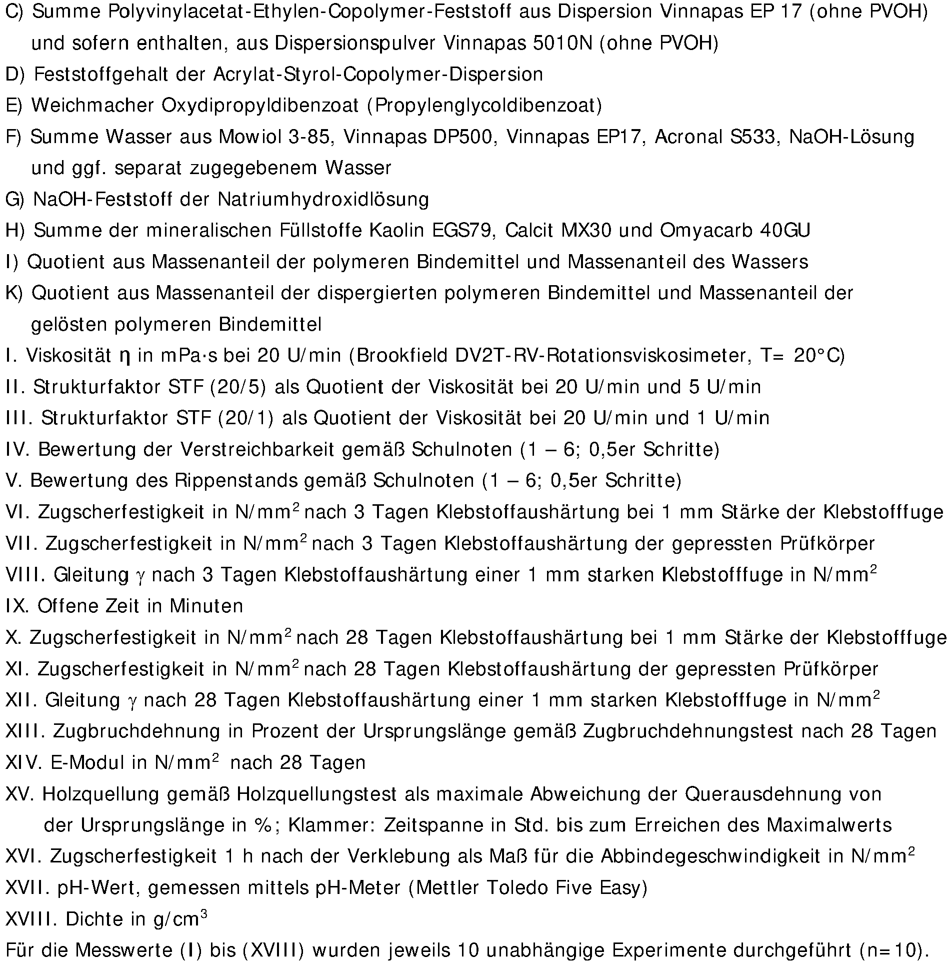

Aus den Daten ergibt sich das Massenverhältnis der Summe aller polymeren Bindemittel zu Wasser (I) sowie das Massenverhältnis der Summe aller dispergierten polymeren Bindemittel zur Summe aller gelösten polymeren Bindemittel (K). Gemäß Patentanspruch 1 muss Quotient (I) ≥ 1,5 und ≤ 3,0 und Quotient (K) ≥ 3 und ≤ 15 sein. Weitere Mindestanforderungen an die erfindungsgemäße Zusammensetzung sind ein PVOH-Mindestgehalt von 4 Massenprozent, ein Mindestgehalt an Vinylacetathaltigem Polymer von 20 Massenprozent, ein Mindestgehalt an Acrylat-haltigem Polymer von 3 Massenprozent, ein Maximalgehalt an sehr leicht- bis sehr schwerflüchtigen organischen Verbindungen von 2 Massenprozent und ein Maximalgehalt an Füll- und Leichtfüllstoffen von zusammen 5 Massenprozent.

Aus der oberen Hälfte von Tabelle 2 ist ersichtlich, dass Ref.1 gegen die Anforderungen der Zeilen (A), (B), (D), (H), (I) und (K) verstößt; Ref.2 gegen (A), (D), (H) und (I) und Ref.3 gegen Zeile (D). Erf.1 bis Erf.4 erfüllen dagegen alle Anforderungen an die Zusammensetzung.

Weiterhin sind in Tabelle 2 (I) bis (XVIII) die Messwerte zu den unter der Aufgabe der Erfindung formulierten möglichen Anforderungen an den erfindungsgemäßen Dispersions-Parkettklebstoff dargestellt. Die Anforderungen im Einzelnen sind:
- Viskosität (20 U/min) von 50.000 bis 200.000 mPa·s
- Strukturfaktor STF 20/5 ≤ 0,45
- Strukturfaktor STF 20/1 ≤ 0,17
- Verstreichbarkeit gemäß Schulnote 1 bis 2,5
- Rippenstand gemäß Schulnote 1 bis 2,5
- Zugscherfestigkeit nach 3 und 28 Tagen (gepresst) ≥ 3,0 N/mm²
   ---+ harter Klebstoff oder
- Zugscherfestigkeit nach 3 und 28 Tagen (d=1 mm) ≥ 2,0 N/mm² und Gleitung□γ ≥ 0,5
   ---+ hart-elastischer Klebstoff oder
- Zugscherfestigkeit nach 3 und 28 Tagen (d=1 mm) ≥ 1,0 N/mm² und Gleitung□γ ≥ 1,0
   ---+ elastischer Klebstoff
- offene Zeit ≥ 20 Minuten
- Zugbruchdehnung ≥ 75%
- E-Modul ≥ 10 und ≤ 120 N/mm²
- Holzquellung ≤ 0,6% Querausdehnung
- Zugscherfestigkeit eine Stunde nach Verklebung ≤ 0,8 N/mm²
- Dichte ≤ 1,1 g/cm³

Zu den Verarbeitungseigenschaften zählen Viskosität, Strukturfaktoren, Verstreichbarkeit und Rippenstand. Zu den mechanischen Kenndaten zählen Zugbruchdehnung und E-Modul sowie Zugscherfestigkeit und Gleitung nach 3 und 28 Tagen Aushärtungszeit. Offene Zeit, Holzquellung und Abbindegeschwindigkeit sind eigenständige Klebstoffeigenschaften.

Die marktüblichen Vergleichsbeispiele Ref.1 und Ref.2 zeigen bezüglich Verarbeitungseigenschaften, offener Zeit, Holzquellung, Abbindegeschwindigkeit, Zugscherfestigkeit und Gleitung nach 3 und 28 Tagen akzeptable, den erfindungsgemäßen Anforderungen entsprechende Messwerte. Nicht erfüllt werden jedoch die Anforderungen an Zugbruchdehnung und E-Modul. Vor allem wird auch die erfindungsgemäße Anforderung an eine maximale Dichte von 1,1 g/cm³ nicht erreicht oder unterschritten.

Ref.3 entspricht bezüglich Viskosität, mechanischer Kenndaten, offener Zeit, Holzquellung, Abbindegeschwindigkeit und Dichte den erfindungsgemäßen Anforderungen, nicht jedoch bezüglich Strukturfaktoren, Verstreichbarkeit und Rippenstand. Die Verarbeitungseigenschaften sind mangelhaft.

Die erfindungsgemäßen Beispiele Erf.1 bis Erf.4 erfüllen dagegen durchgängig alle Anforderungen an Verarbeitungseigenschaften, mechanische Kenndaten, offene Zeit, Holzquellung, Abbindegeschwindigkeit und vor allem auch an die Dichte.

In allen Vergleichsbeispielen und erfindungsgemäßen Ausführungsformen ist ein gemäß Patentanspruch 1 geforderter pH-Wert von ≥ 7,0 eingestellt.

Die mechanischen Kenndaten zu Zugscherfestigkeit und Gleitung von Ref.1 und Ref.2 entsprechen denen eines harten und hart-elastischen Parkettklebstoffs, während die von Ref.3 und Erf.1 bis Erf.4 den Kenndaten eines harten, hart-elastischen und elastischen Parkettklebstoffs entsprechen.

Insgesamt zeigen die experimentellen Ergebnisse, dass die erfindungsgemäßen Dispersions-Parkettklebstoffe den konventionellen bezüglich Gleitung, Zugbruchdehnung und E-Modul deutlich überlegen sind. Auch sind die Verarbeitungseigenschaften besser, insbesondere bezüglich Rippenstand. Ref.3 zeigt, dass mindestens ein Acrylat-haltiges Polymer essentiell für gute Verarbeitungseigenschaften ist.

Die ausgeführten erfindungsgemäßen Dispersions-Parkettklebstoffe weisen in der Summe folgende vorteilhafte Eigenschaften auf:
1. E-Modul 10 bis 120 N/mm²
2. Zugbruchdehnung ≥ 75%
3. Zugscherfestigkeit nach 3 und 28 Tagen Aushärtung (gepresst) ≥ 3,0 N/mm²
4. Zugscherfestigkeit nach 3 und 28 Tagen Aushärtung (d = 1,0 mm) ≥ 2,0 N/mm²
5. Gleitung nach 3 und 28 Tagen Aushärtung (d = 1,0 mm) ≥ 1,0
6. Viskosität (20 U/min) 50.000 bis 200.000 mPa·s
7. Verstreichbarkeit ≤ 2,5 (Schulnote)
8. Rippenstand ≤ 2,5 (Schulnote)
9. Strukturfaktor STF 20/5 ≤ 0,45
10. Strukturfaktor STF 20/1 ≤ 0,17
11. Offene Zeit ≥ 20 Minuten
12. Dichte ≤ 1,1 g/cm³
13. Holzquellung (Querausdehnung) ≤ 0,6%
14. Abbindegeschwindigkeit (Zugscherfestigkeit nach 1 h Aushärtung) ≤ 0,8 N/mm²
15. Gute Haftung an unterschiedlichen Holzarten und auf unterschiedlichen Untergründen
16. Umwelt- und gesundheitsschonend
17. Vorteile bei Entsorgung und Recycling
18. Nachhaltig und ressourcenschonend

Der kundenseitige Wunsch nach dichtereduzierten Dispersions-Parkettklebstoffen muss demzufolge keineswegs mit Nachteilen hinsichtlich mechanischer Kenndaten, Verarbeitungseigenschaften, Holzquellung, Abbindegeschwindigkeit oder offener Zeit erkauft werden. Ganz im Gegenteil bestehen diesbezüglich überraschenderweise sogar erhebliche Vorteile.

Zusammen mit den Vorteilen bezüglich Nachhaltigkeit und Ressourcenschonung, Umwelt- und Gesundheitsschutz, Recycling und Entsorgung ergibt sich mit den erfindungsgemäßen Dispersions-Parkettklebstoffen ein neuer Meilenstein der Parkettverklebung.

### Definitionen und Erläuterungen

Nachfolgende Begriffe und Definitionen gelten für den gesamten Text der vorliegenden Anmeldung.

### Polymer:

Polymere können natürlichen oder synthetischen Ursprungs sein. Nach ihrem mechanisch-thermischen Verhalten sind sie unterteilbar in Thermoplaste, Elastomere und Duromere. Die Übergänge zwischen den Klassen sind jedoch nicht scharf, sondern fließend. Thermoplastische Polymere zeigen auch immer ein partiell elastisches Verhalten. Umgekehrt zeigen elastomere und duromere Polymere auch immer ein partiell thermoplastisches Verhalten. Die mechanischen Eigenschaften von Polymeren werden daher als viskoelastisch bezeichnet. Der elastische Anteil ist über den Elastizitätsmodul charakterisierbar. Die als Bindemittel verwendeten Polymere haben überwiegend thermoplastische Eigenschaften. Polymere besitzen ein massenmittleres Molekulargewicht M_{w} von ≥ 10.000 g/mol.

(Siehe auch Hans-Georg Elias; Macromolecules, Volume 3: Physical Structure and Properties; Wiley-VCH Verlag GmbH & Co. KGaA, Weinheim; 2008; S. 16 ff.).

### Polymeres Bindemittel:

In Wasser lösliche und/oder dispergierbare Polymere, die überwiegend thermoplastische Eigenschaften besitzen und geeignet sind, eine Haftung zwischen dem zu verklebenden Substrat und dem Untergrund aufzubauen. Überwiegend nicht thermoplastische Polymere, wie z.B. gemahlener Gummi (Elastomer) oder Bakelit (Duromer) gelten nicht als polymeres Bindemittel, sondern als Füllstoff.

### Copolymer:

Ein Polymer, das aus mindestens zwei unterschiedlichen Arten von Monomeren aufgebaut ist. Das Monomer mit dem höchsten Massenanteil steht bei der Benennung vorne.

### Homopolymer:

Ein Polymer, das ausschließlich aus einer Art von Monomeren aufgebaut ist.

### Polyacrylat:

Ein aus mindestens einem Acrylsäureester und/oder Acrylsäure hergestelltes Polymer. Sind weitere Acrylsäurederivate, wie Methacrylsäure, Methacrylsäureester, Acrylamid oder Acrylnitril enthalten, handelt es sich um ein Acrylat-Copolymer. Die Alkoholkomponenten der Acrylsäureester können u.a. Methanol, Ethanol, n-Butanol, Isobutanol, tert-Butanol, 2-Ethylhexanol, 1-Dodecanol oder zur Quervernetzung auch ethylenisch ungesättigte Alkohole wie Allylalkohol sein. In Abhängigkeit von ihrem Anteil freier Säurefunktionen und anderer polarer Gruppen sind Polyacrylate in Wasser löslich oder unlöslich. In Wasser unlösliche Polyacrylate sind als Feststoff (z.B. Dispersionspulver) oder Dispersion kommerziell verfügbar. In Wasser lösliche Polyacrylate sind als Feststoff, Dispersion oder Lösung kommerziell verfügbar.

### Acrylat-Copolymer:

Ein aus mindestens einem Acrylsäureester und/oder Acrylsäure und mindestens einer weiteren ethylenisch ungesättigten Verbindung hergestelltes Polymer. Die mindestens eine weitere ethylenisch ungesättigte Verbindung kann z.B.

Methacrylsäure, ein Methacrylsäureester, Acrylamid, Acrylnitril, Vinylchlorid, ein einfach oder mehrfach ungesättigtes Alken wie u.a. Ethylen, Isobuten, Butadien, Isopren oder Limonen, eine einfach- oder mehrfachfunktionelle Carbonsäure wie u.a. Crotonsäure, Maleinsäure, Muconsäure oder deren Ester oder ein Aromat wie Styrol sein. Die Alkoholkomponenten der enthaltenen Ester können u.a. Methanol, Ethanol, n-Butanol, Isobutanol, tert-Butanol, 2-Ethylhexanol, 1-Dodecanol oder zur Quervernetzung auch ethylenisch ungesättigte Alkohole wie Allylalkohol sein. In Abhängigkeit von ihrem Anteil freier Säurefunktionen und anderer polarer Gruppen sind Acrylat-Copolymere in Wasser löslich oder unlöslich. In Wasser unlösliche Acrylat-Copolymere sind als Feststoff (z.B. Dispersionspulver) oder Dispersion kommerziell verfügbar. In Wasser lösliche Acrylat-Copolymere sind als Feststoff, Dispersion oder Lösung kommerziell verfügbar.

### Acrylat-haltiges Polymer:

Ein Polyacrylat, ein Acrylat-Copolymer oder ein anderes Acrylat-haltiges Polymer, bei dem "Acrylat" bei der Benennung nicht vorne steht, also nicht den Hauptbestandteil des Polymers bildet. Es handelt sich um ein Polymer, in dem Acrylate als einzige Monomere oder unter anderen Arten von Monomeren enthalten sind.

### Acrylat-Styrol-Copolymer:

Ein aus mindestens einem Acrylsäureester und/oder Acrylsäure und Styrol hergestelltes Polymer, wobei zusätzlich eine oder mehrere ethylenisch ungesättigte Verbindungen wie Methacrylsäure, Methacrylsäureester, Acrylnitril, Acrylamid, Vinylchlorid, einfach oder mehrfach ungesättigte Alkene wie u.a. Ethylen, Isobuten, Butadien, Isopren oder Limonen, ungesättigte einfach- oder mehrfachfunktionelle Carbonsäuren wie u.a. Crotonsäure, Maleinsäure, Muconsäure, deren Ester oder weitere Aromaten enthalten sein können. Die Alkoholkomponenten der enthaltenen Ester können u.a. Methanol, Ethanol, n-Butanol, Isobutanol, tert-Butanol, 2-Ethylhexanol, 1-Dodecanol oder zur Quervernetzung auch ethylenisch ungesättigte Alkohole, wie Allylalkohol sein. In Abhängigkeit von ihrem Anteil freier Säurefunktionen und anderer polarer Gruppen sind Acrylat-Styrol-Copolymere in Wasser löslich oder unlöslich. In der Regel sind Acrylat-Styrol-Copolymere jedoch wasserunlöslich und als Feststoff (z.B. Dispersionspulver) oder Dispersion kommerziell verfügbar.

Im Sprachgebrauch und der Literatur hat sich die Bezeichnung "Styrol-Acrylat-Copolymer" eingebürgert, auch wenn Acrylate den Hauptbestandteil des Copolymers stellen. Dieser Nomenklaturabweichung wird sich im Rahmen dieser Offenlegung nicht angeschlossen.

### Acrylat-Carbonsäure-Copolymer:

Ein aus mindestens einem Acrylsäureester und/oder Acrylsäure und anderen ethylenisch ungesättigten einfach- oder mehrfachfunktionellen Carbonsäuren, wie Crotonsäure, Maleinsäure, Muconsäure oder Methacrylsäure, hergestelltes Polymer, wobei zusätzlich eine oder mehrere ethylenisch ungesättigte Verbindungen wie Acrylnitril, Acrylamid, Vinylchlorid, einfach oder mehrfach ungesättigte Alkene, Aromaten oder Ester der Carbonsäuren enthalten sein können. Die Alkoholkomponenten der enthaltenen Ester können u.a. Methanol, Ethanol, n-Butanol, Isobutanol, tert-Butanol, 2-Ethylhexanol, 1-Dodecanol oder zur Quervernetzung auch ethylenisch ungesättigte Alkohole, wie Allylalkohol sein. In Abhängigkeit von ihrem Anteil freier Säurefunktionen und anderer polarer Gruppen sind Acrylat-Carbonsäure-Copolymere in Wasser löslich oder unlöslich. Acrylat-Carbonsäure-Copolymere sind als Feststoff (z.B. Dispersionspulver), Dispersion oder Lösung kommerziell verfügbar.

### Polyvinylacetat (PVAc):

Ein aus dem Monomer Vinylacetat hergestelltes Polymer. Die zur Herstellung eingesetzten Monomere können zu einem geringen Teil auch andere ethylenisch ungesättigte Verbindungen sein, wie Ethylen, Crotonsäure, Maleinsäure oder andere ungesättigte Carbonsäuren und deren Ester. Auch weitere Ester des Vinylalkohols, wie Vinylpropionat, Vinylbutyrat oder Vinyllaurat können in geringen Mengen enthalten sein. Polyvinylacetat ist wasserunlöslich und als Dispersion oder Feststoff kommerziell verfügbar.

### Vinylacetat-Homopolymer:

Reines Polyvinylacetat, das ausschließlich aus Vinylacetat-Monomeren aufgebaut ist. Vinylacetat-Homopolymere sind wasserunlöslich und als Dispersion oder Feststoff kommerziell verfügbar.

### Vinylacetat-Copolymer:

Ein aus Vinylacetat und mindestens einer anderen ethylenisch ungesättigten Verbindung hergestelltes Polymer. Andere ethylenisch ungesättigte Verbindungen können andere Ester des Vinyalkohols wie u.a. Vinylpropionat, Vinylbutyrat, Vinyllaurat, ungesättigte Carbonsäuren wie Crotonsäure, Muconsäure oder Maleinsäure und/oder deren Ester sein. In Abhängigkeit von ihrem Anteil freier Säurefunktionen und anderer polarer Gruppen sind Vinylacetat-Copolymere in Wasser löslich oder unlöslich. In der Regel sind sie jedoch wasserunlöslich und als Dispersion oder Feststoff kommerziell verfügbar.

### Vinylacetat-haltiges Polymer:

Ein Vinylacetat-Homopolymer, Vinylacetat-Copolymer, Polyvinylacetat oder ein anderes Vinylacetat-haltiges Polymer, bei dem Vinylacetat bei der Benennung nicht vorne steht, also nicht den Hauptbestandteil des Polymers bildet. Es handelt sich um ein Polymer, in dem Vinylacetat als einziges oder eines von mehreren Arten von Monomeren enthalten ist.

### Vinylacetat-Ethylen-Copolymer:

Ein aus den Monomeren Vinylacetat und Ethylen hergestelltes Polymer, wobei Vinylacetat einen höheren Massenanteil besitzt als Ethylen. Vinylacetat-EthylenCopolymere sind wasserunlöslich und kommerziell als Feststoff oder Dispersion verfügbar.

### Polyvinylalkohol (PVOH):

Polyvinylalkohol wird durch Hydrolyse (Verseifung) aus Polyvinylacetat hergestellt. In der Regel ist die Hydrolyse unvollständig, so dass das Polymer Hydroxyl- und Acetatgruppen besitzt. Der Hydrolysegrad liegt typischerweise im Bereich von 81 bis 99 Molprozent. Die untere Grenze des Hydrolysegrads zeigt an, ab wann das Polymer wasserlöslich wird. Sofern nicht anders bezeichnet, liegen ein oder mehrere dieser Hydroysierungsgrade dem Begriff "Polyvinylalkohol (PVOH)" zugrunde. Vollständig hydrolysiertes Polyvinylacetat mit einem Hydrolysegrad von > 99% ist nicht Gegenstand dieser Offenlegung. Ab Hydrolysegraden von ca. 97 Molprozent nimmt die Kaltwasserlöslichkeit merklich ab. PVOH mit Hydrolysegraden von 81 bis 99 Molprozent ist wasserlöslich und als Feststoff oder Lösung kommerziell verfügbar. Chemisch korrekt müsste dieses Polymer eigentlich "Teilhydrolysiertes Polyvinylacetat" oder "Teilveresterter Polyvinylalkohol" heißen, es wird jedoch nachfolgend einfach als "Polyvinylalkohol" bezeichnet. Rein formal handelt es sich um ein Copolymer aus Vinylacetat und Vinylalkohol.

(Siehe auch Ulrich Poth; Synthetische Bindemittel für Beschichtungssysteme; Vincentz Network GmbH & Co. KG, Hannover; 2016, S. 382).

### Klebstoffdichte:

Die Dichte des Klebstoffs in g/cm³, bestimmt gemäß DIN EN ISO 2811-1:2016-08; Randbedingungen: Temperatur T=23 ± 0,5 °C, Metallpyknometer mit Volumen V=100 cm³.

### Zugscherfestigkeit:

Die Zugscherfestigkeit der Verklebung gemessen nach DIN EN ISO 17178:2020-06; Vorbereitung der Prüfmuster mit gepresster Klebstofffuge und einer Klebstofffuge mit einer Schichtdicke d von 1,0 ± 0,3 mm
- nach Kap. 4.2 (gepresst) und Lagerung gemäß Kap. 4.2.4 (Lagerungsarten a und b) und
- nach Kap. 4.4 (d = 1,0 mm) und Lagerung gemäß Kap. 4.4.4 (Lagerungsarten a und b).

### Gleitung/Gleitung γ:

Die Gleitung γ oder Gleitung ist eine dimensionslose Größe und gibt die Längsverformung einer Dickeneinheit einer Klebstofffuge unter einer Scherkraft in Zugrichtung an und wird bei der Messung der Zugscherfestigkeit eines Klebstoffs nach DIN EN ISO 17178:2020-06 gemessen; Vorbereitung der Prüfmuster gemäß Kap. 4.4 und Lagerung gemäß Kap. 4.4.4 (Lagerungsarten a und b).

### Scherfestigkeit (Presso Mess):

Die Scherfestigkeit einer Verklebung ist die bei horizontaler Druckbeanspruchung auf einen Probenkörper mit Hilfe des Scherfestigkeits-Messgeräts "Presso Mess" (Hersteller: Uzin Utz Tools GmbH & Co.KG, Ilsfeld, Baujahr 2019) ausgeübte Kraft, die gerade zum Bruch der Verbindung zwischen Probenkörper und Untergrund führt (siehe auch "Haftungseigenschaften").

### Elastizitätsmodul (E-Modul)/Zugmodul:

Während in der beschreibenden DIN EN ISO 527-1 :2019-12 der Begriff "Zugmodul" verwendet wird, wird hier der bekanntere Begriff "Elastizitätsmodul (E-Modul)" gewählt. Der Elastizität-Modul ist der Quotient aus Zugspannung und Zugdehnung im linear-elastischen Bereich der Verformung eines festen Körpers. Hierbei liegt eine uniaxiale Zugbeanspruchung eines quaderförmigen Körpers aus gehärtetem Klebstoff vor. Die Spannung ist dabei der Quotient aus der Zugkraft und der Fläche des Quaders senkrecht zur Zugkraft. Der E-Modul wird ermittelt beim Zugversuch nach DIN EN ISO 527-1:2019-12 mit folgenden Randbedingungen:
- Prüfgeschwindigkeit: 20 mm/min
- Anzahl der Prüfkörper: n= 10
- Abmessungen und Form der Prüfkörper gemäß DIN EN ISO 527-2:2012-06, Typ 1B
- Lagerungsbedingungen gemäß DIN EN ISO 17178:2020-06; Kap. 4.4.4 (Lagerungsart b).

### Zugbruchdehnung:

Die Zugbruchdehnung wird an einem Streifen ausgehärteten Klebstoffs ermittelt. Der Klebstoffstreifen wird dabei unter dynamischer Zugbelastung bis zum Reißen gestreckt. Die Zugbruchdehnung ist der letzte vor dem Reißen gemessene Dehnungswert. Die Angabe erfolgt prozentual im Vergleich zur Ausgangslänge. Die Messung erfolgt gemäß DIN EN ISO 527-1:2019-12 mit folgenden Randbedingungen:
- Prüfgeschwindigkeit: 20 mm/min
- Anzahl der Prüfkörper: n= 10
- Abmessungen und Form der Prüfkörper: DIN EN ISO 527-2:2012-06; Typ 1B.
- Lagerungsbedingungen: DIN EN ISO 17178:2020-06; Kap. 4.4.4 (Lagerungsart b).

### Mechanische Eigenschaften:

Dispersions-Parkettklebstoffe basieren auf Polymeren, deren Mechanik durch Thermoplastizität und Elastizität gekennzeichnet ist, wobei die thermoplastischen Anteile überwiegen. Die mechanischen Eigenschaften müssen besonders ausgewogen sein, um zum einen den Parkettboden langfristig plan und möglichst fugenfrei zu fixieren, zum anderen die erheblichen Spannungen, die Holz bei Änderung seines Feuchtegehalts und damit seiner Dimensionen aufbauen kann, in geeignetem Maß durch Deformation der Klebstofffuge abzubauen, so dass eine Zerstörung des Verbunds Parkett-Klebstoff-Untergrund vermieden wird. Der Dispersionsparkettklebstoff muss daher über eine ausgewogene Mechanik mit geeigneten E-Modulen, Zugscherfestigkeiten und Zugbruchdehnungen verfügen.

### Offene Zeit:

Die offene Zeit ist die Zeitspanne zwischen dem Auftrag des Klebstoffs auf den Untergrund und dem Einlegen und Andrücken des zu klebenden Substrats, bis zu der noch eine ausreichende Adhäsion des Klebstoffs an das zu klebende Substrat erfolgt, gemessen über die Zugscherfestigkeit nach DIN EN ISO 17178:2020-06 mit Prüfmustervorbereitung gemäß Kap. 4.4 und Lagerung gemäß Kap. 4.4.4 (Lagerungsart a). Nach dieser Normvorschrift wird der zu testende Klebstoff auf eine Mosaikparkettlamelle aufgetragen und nach einer bestimmten Wartezeit eine zweite Mosaikparkettlamelle in die Klebstoffschicht gedrückt. Es werden mehrere solcher Prüfmuster mit unterschiedlich langen Wartezeiten hergestellt. Nach der Lagerung wird die Zugscherfestigkeit ermittelt und gegen die Wartezeit aufgetragen. Die maximale Wartezeit, bei der noch die Anforderungen an die Zugscherfestigkeit gemäß DIN EN ISO 17178:2020-06 (Prüfmustervorbereitung gemäß Kap. 4.4 und Lagerung gemäß Kap. 4.4.4 (Lagerungsart a)) erfüllt werden, ist die offene Zeit des Klebstoffs. Die Klebung von Parkettelementen ist dauerhaft sicher, wenn die Elemente innerhalb der offenen Zeit des Klebstoffs in das Klebstoffbett eingelegt und angedrückt werden. Dispersions-Parkettklebstoffe müssen eine relativ lange offene Zeit von mindestens 20 min besitzen, so dass bei der handwerklichen Parkettinstallation über einen ausreichend langen Zeitraum der Adhäsionsaufbau des Klebstoffs an das Parkett und damit eine dauerhaft feste Klebung gewährleistet ist.

### Haftungseigenschaften:

Die Haftungsprüfung erfolgt durch Bestimmung der Scherfestigkeit mittels des Scherfestigkeits-Messgeräts "Presso Mess" (Hersteller: Uzin Utz Utz Tools GmbH & Co.KG, Ilsfeld; Baujahr 2019). Dabei wird ein Anschlag für das mechanische Prüfgerät mit einem schnell erhärtenden, hochfesten und hochmoduligen 2-Komponenten-Polyurethanklebstoff auf den zu prüfenden Untergrund geklebt. Prüfkörper aus den zu prüfenden Holzarten werden mit dem zu prüfenden Klebstoff in einem definierten Abstand zum festen Anschlag auf den zu prüfenden Untergrund geklebt. Nach einer Härtungszeit des zu prüfenden Klebstoffs von 3 Tagen und 28 Tagen werden die Prüfkörper mittels des Presso Mess-Geräts horizontal vom Untergrund unter Druckbeanspruchung abgeschert und die dabei auftretende maximale Scherspannung als Scherfestigkeit (N/mm²) notiert.

Die Prüfung erfolgt mit Prüfkörpern aus Eiche, Buche, Ahorn, Olive, Wenge, Iroko, Ipe Lapacho und/oder Cumaru auf Untergründen aus Beton, Zementestrich, Calciumsulfatfließestrich, zementären Spachtelmassen und/oder Calciumsulfat-Spachtelmassen.

### Pseudoplastische Rheologie, Strukturviskosität:

Unter pseudoplastischer Rheologie, Strukturviskosität oder auch scherverdünnendem Verhalten ist die Eigenschaft einer Flüssigkeit zu verstehen, die bewirkt, dass die Viskosität mit steigender Scherrate abfällt. Vom pseudoplastischen Verhalten sind das newtonsche Verhalten (Viskosität ändert sich mit steigender Scherrate nicht) und das dilatante oder scherverdickende Verhalten (Viskosität steigt mit der Scherrate an) zu unterscheiden (siehe auch Thomas Mezger; Das Rheologie-Handbuch; Curt R. Vincentz Verlag, Hannover; 2000).

Die Viskositätsmessungen erfolgen mit dem Rotationsviskosimeter Brookfield DV2T-RV mit Einzelzylinder, Spindelgröße R7 nach DIN EN ISO 2555:2018-09 bei 20°C. Als Maß für die Scherrate / das Schergefälle wird daher im Folgenden die Drehzahl mit der Einheit [U/min] angegeben. Die Quotienten der Viskositäten bei unterschiedlichen Drehzahlen [η(20 U/min) ÷ η(5 U/min)] bzw. [η(20 U/min) ÷ η(1 U/min)] sind ein Maß für den Verlauf der Viskositäts-Scherraten-Kurve. Die Quotienten werden auch als Strukturfaktoren (STF) bezeichnet; in Abhängigkeit von den eingestellten Drehzahlen kurz als STF 20/5 bzw. STF 20/1. Bei Flüssigkeiten mit pseudoplastischer Rheologie sind die Strukturfaktoren kleiner als 1. Ausgeprägtes strukturviskoses Verhalten eines Dispersions-Parkettklebstoffs liegt vor, wenn der Strukturfaktor STF 20/5 ≤ 0,45 und der Strukturfaktor STF 20/1 ≤ 0,17 ist. Dispersions-Parkettklebstoffe müssen eine ausgeprägte pseudoplastische Rheologie aufweisen, damit auf den Untergrund mittels eines Zahnspachtels aufgetragener Klebstoff einerseits leicht zu Klebstoffraupen verformt werden kann und andererseits die gezogenen Klebstoffraupen formstabil bleiben.

### Holzquellung:

In Dispersions-Parkettklebstoffen enthaltenes Wasser wird bei der Abbindung des Klebstoffs vom Parkettholz aufgenommen, jeweils in einer Geschwindigkeit und Gesamtmenge, die vor allem vom Wassergehalt des Klebstoffs und der Wasseraufnahmekapazität des Holzes abhängt. Durch die Wasseraufnahme quillt das Parkettholz, wodurch entsprechende Maßänderungen der Parkettelemente auftreten. Um einen plan liegenden, möglichst fugenlosen Parkettboden zu erhalten, muss die Holzquellung auf ein Maß begrenzt sein, welches im Holzquellungstest einer maximalen Gesamt-Querausdehnung der Parkettelemente von ≤ 0,6% entspricht. Zur Bestimmung der Holzquellung werden auf einen definierten Untergrund (Spanplatte nach DIN EN 312 P7, 40 mm stark; grundiert mit einer Acrylat-Styrol-Copolymer-Dispersion; darauf eine 5 mm-Schicht aus einer zementären selbstverlaufenden Bodenspachtelmasse; grundiert mit einer Acrylat-Styrol-Copolymer-Dispersion) Lamparkett-Stäbe der Abmessung Länge = 250 mm, Breite = 50 mm, Stärke= 10 mm mit allseits rechtwinkligen Ecken in der Holzart Canadischer Ahorn geklebt. Die Stäbe weisen liegende Jahresringe auf (Fladerschnitt). Der Dispersions-Parkettklebstoff wird mit Hilfe eines Zahnspachtels (TKB B 15) auf den Untergrund aufgetragen. Unmittelbar nach dem Klebstoffauftrag werden 20 Parkettstäbe mit der Oberseite nach unten und den Längsseiten eng aneinander so in den Klebstoff eingelegt und angedrückt, dass die Holzfläche vollflächig mit Klebstoff benetzt ist. Dabei sind die einzelnen Parkettstäbe so orientiert, dass die Faserrichtung der Parkettstäbe rechtwinklig zur Laufrichtung der Klebstoffrippen liegt. Nach dem Einlegen des letzten Stabs werden die nebeneinander liegenden Parkettstäbe zusammengepresst, so dass eine fugenlose Fläche von 100 cm Breite vorliegt. Es wird der Nullwert der Flächenbreite gemessen. Im Verlauf der nächsten Stunden nimmt das Holz aus dem Dispersions-Parkettklebstoff sukzessive Wasser auf und ändert seine Dimensionen in allen drei Raumrichtungen. Das Gesamt-Breitenwachstum der 20 geklebten Stäbe wird nach dem Nullwert bis zu einer Zeit von 12 Stunden alle 15 min gemessen. Innerhalb dieser 12 Stunden tritt zu einem Zeitpunkt der Maximalwert der Gesamt-Querausdehnung auf und wird als Wert des prozentualen Breitenwachstums protokolliert.

### Abbindegeschwindigkeit:

Die zeitliche Entwicklung der Zugscherfestigkeit des Parkettklebstoffs innerhalb der ersten Stunden nach der Parkettverklebung (Lagerung bei T=23 °C und relativer Luftfeuchte=50 %) gemessen gemäß DIN EN ISO 17178:2020-06 (Prüfmustervorbereitung gemäß Kap. 4.2 (gepresste Prüfkörper)). Die Entwicklung der Zugscherfestigkeit in den ersten Stunden bestimmt wesentlich die Festigkeit des Verbundes von Untergrund, Klebstoff und Parkettelement. Läuft die Entwicklung der Zugscherfestigkeit der Wasseraufnahme des Holzes voraus, besteht die Gefahr des Auftretens von Spannungen, die den Untergrund als schwächstes Glied des Aufbaus zerstören können. Aus diesem Grund muss die Abbindegeschwindigkeit des Klebstoffs auf die Wasseraufnahmegeschwindigkeit des Holzes abgestimmt sein, d.h. sie darf keineswegs zu schnell erfolgen. Eine Abbindegeschwindigkeit, die eine Stunde nach der Parkettverklebung (Lagerung bei 23°C und relativer Luftfeuchte von 50%) zu Zugscherfestigkeiten, gemessen nach DIN EN ISO 17178:2020-06 (Prüfmustervorbereitung gemäß Kap. 4.2), von ≤ 0,8 N/mm² führt, gilt als hinreichend langsam.

### Maßhaltigkeit:

Die Maßhaltigkeit beschreibt die Dimensionsänderungen von geklebtem Parkett, die durch Änderungen des Raumklimas, insbesondere der Luftfeuchtigkeit, entstehen. Experimentell ist die Maßhaltigkeit durch Wechselklimalagerung einer geklebten Parkettfläche mit ausgehärtetem Dispersions-Parkettklebstoff zugänglich.

### Dispersionspulver:

Ein aus einer wässrigen Polymerdispersion durch Trocknung (z.B. Sprühtrocknung, Gefriertrocknung) hergestelltes Pulver, das durch Wasserzugabe redispergiert, so dass wieder eine wässrige Polymerdispersion entsteht. Vinylacetat-Ethylen-Copolymer-Dispersionspulver enthalten ein Schutzkolloid, das in einer Menge von einigen Massenprozent enthalten ist. In der Regel handelt es sich dabei um Polyvinylalkohol. Zudem können Dispersionspulver als Antiblockmittel geringe Mengen mineralischer Füllstoffe enthalten. Die eingesetzten Mengen sind jedoch so gering, dass der obere Grenzwert für "erlaubte" technische Verunreinigungen von 0,3 Massenprozent in der Dispersions-Parkettklebstoff-Zusammensetzung nicht überschritten wird (siehe auch "Füllstoffe").

### Koaleszenzm ittel:

Schwerflüchtige organische Verbindungen, die einem Dispersions-Parkettklebstoff zur Senkung der Mindestfilmbildetemperatur (MFT) zugesetzt werden. Ist eine Zusammensetzung als frei von Koaleszenzmitteln deklariert ("enthält keine"), sind der Zusammensetzung keine Koaleszenzmittel als solche zugesetzt. Sie können jedoch aus anderen Komponenten, in denen sie z.B. als Additiv oder technische Verunreinigung enthalten sind, eingeschleppt sein und auf diese Weise bis zu einem Gehalt von 0,1 Massenprozent in der Dispersions-Parkettklebstoff-Zusammensetzung enthalten sein.

### Mindestfilmbildetemperatur (MFT):

Die Mindestfilmbildetemperatur ist die niedrigste Temperatur, bei der eine trocknende Polymerdispersion noch einen zusammenhängenden Film bildet (siehe auch: Wässrige Polymerdispersionen; Herausgeber: Dieter Distler; Wiley-VCH Verlag GmbH; 1999; S. 51 f.).

### Weichmacher:

Sehr schwerflüchtige organische Verbindungen, die einem Dispersions-Parkettklebstoff zur Senkung der Glasübergangstemperatur (Tg) zugesetzt werden (siehe auch Taschenbuch der Kunststoff-Additive; Herausgeber: R. Gächter und H. Müller; Carl Hanser Verlag München Wien, 3. Ausgabe, 1989; S. 341 ff.).

Ist eine Zusammensetzung als frei von Weichmachern deklariert ("enthält keine"), sind der Zusammensetzung keine Weichmacher als solche zugesetzt. Sie können jedoch aus anderen Komponenten, in denen sie z.B. als Additiv oder technische Verunreinigung enthalten sind, eingeschleppt sein und auf diese Weise bis zu einem Gehalt von 0,1 Massenprozent in der Dispersions-Parkettklebstoff-Zusammensetzung enthalten sein.

### Glasübergangstemperatur (T_{g}):

Die Glasübergangstemperatur ist die Temperatur, bei deren Überschreiten ein Polymer vom glasartigen Zustand in einen gummiartigen bis zähflüssigen Zustand übergeht.

### Sehr leicht- bis sehr schwerflüchtige organische Verbindungen:

Dies sind bei Raumtemperatur und Normalluftdruck flüssige organische Verbindungen mit einem Siedepunkt von ca. 30°C bis 300°C. Die organischen Verbindungen können Weichmacher, Koaleszenzmittel oder organische Lösungsmittel sein. Ist eine Zusammensetzung als frei von sehr leicht- bis sehr schwerflüchtigen organischen Verbindungen deklariert ("enthält keine"), sind der Zusammensetzung keine sehr leicht- bis sehr schwerflüchtige organische Verbindungen als solche zugesetzt. Sie können jedoch aus anderen Komponenten, in denen sie z.B. als Additiv oder technische Verunreinigung enthalten sind, eingeschleppt sein und auf diese Weise bis zu einem Gehalt von 0,1 Massenprozent in der Dispersions-Parkettklebstoff-Zusammensetzung enthalten sein.

### Füllstoff:

Bei Raumtemperatur feste, natürlich vorkommende oder synthetische anorganische oder organische Substanzen, die nicht wasserlöslich sind, nicht als Bindemittel fungieren und einem Dispersions-Parkettklebstoff in zumeist größeren Mengen zugesetzt werden. Die Primärteilchen können unterschiedliche Formen haben, z.B. rund oder faserartig. Die mittlere Teilchengröße umfasst typischerweise einen Bereich von 0,02 µm bis 70 µm (siehe auch Detlef Gysau; Füllstoffe; Vincentz Network GmbH & Co. KG, Hannover; 2005). Sie dienen der "Auffüllung" der Formulierung und der Einstellung von mechanischen Eigenschaften, Viskosität und Verarbeitungseigenschaften. In Dispersions-Parkettklebstoffen werden hauptsächlich mineralische Füllstoffe - überwiegend Calciumcarbonate - eingesetzt. Mit Massengehalten von 40% bis 60% sind sie häufig der Hauptbestandteil. Ist eine Zusammensetzung als frei von Füllstoffen deklariert ("enthält keine"), sind der Zusammensetzung keine Füllstoffe als solche zugesetzt. Sie können jedoch aus anderen Komponenten, in denen sie z.B. als Additiv oder technische Verunreinigung enthalten sind, eingeschleppt sein und auf diese Weise bis zu einem Gehalt von 0,3 Massenprozent in der Dispersions-Parkettklebstoff-Zusammensetzung enthalten sein.

### Leichtfüllstoff:

Leichtfüllstoffe sind eine Untergruppe der Füllstoffe mit Dichten von deutlich unter einem Gramm pro Kubikzentimeter. Sie werden der Klebstoffformulierung zur Reduktion der Dichte zugesetzt. Die mittlere Teilchengröße umfasst typischerweise einen Bereich von 50 µm bis 200 µm. Im Vergleich zu klassischen mineralischen Füllstoffen bewirken sie eine Verschlechterung der mechanischen Eigenschaften und der Verarbeitungseigenschaften. Ist eine Zusammensetzung als frei von Leichtfüllstoffen deklariert ("enthält keine"), sind der Zusammensetzung keine Leichtfüllstoffe als solche zugesetzt. Sie können jedoch aus anderen Komponenten, in denen sie z.B. als Additiv oder technische Verunreinigung enthalten sind, eingeschleppt sein und auf diese Weise bis zu einem Gehalt von 0,3 Massenprozent in der Dispersions-Parkettklebstoff-Zusammensetzung enthalten sein.

### Molekulargewicht:

Sofern nicht anderweitig spezifiziert, steht "Molekulargewicht" ausschließlich für das massenmittlere Molekulargewicht Mw mit der Einheit Gramm pro Mol (g/mol), bestimmt mit Hilfe der Gelpermeations-Chromatographie (GPC), auch Size Exclusion Chromatography (SEC) oder Molekularsieb-Chromatographie genannt.

### Mittlere Teilchen- oder Partikelgröße:

Die mittlere Teilchen- oder Partikelgröße ist der Mittelwert einer Teilchengrößenverteilung, die mittels Laserbeugung ermittelt wird (Messgerät Sympatec Helos R2, R3, R4).

### Wasserunlöslichkeit:

Substanzen, die sich in Wasser bei Raumtemperatur T= 23°C und Normalluftdruck zu weniger als 0,1 g pro Liter lösen, gelten als wasserunlöslich.

Konventionelle, herkömmliche, klassische, moderne, aktuelle oder marktübliche Dispersions-Parkett klebstoffe:
Es sind Dispersions-Parkettklebstoffe, die dem Stand der Technik entsprechen.

## Patentansprüche

1. Wässriger Dispersions-Parkettklebstoff **dadurch gekennzeichnet, dass** er bis zu 39 Massenprozent Wasser und folgende mindestens drei polymeren Bindemittel enthält oder aus ihnen besteht:
a) mindestens 4 Massenprozent mindestens eines gelösten Polyvinylalkohols,
b) mindestens 20 Massenprozent mindestens eines wasserunlöslichen dispergierten Vinylacetat-haltigen Polymers und
c) mindestens 3 Massenprozent mindestens eines wasserunlöslichen dispergierten Acrylat-haltigen Polymers, wobei
- das Massenverhältnis der Summe aller in der Zusammensetzung vorliegenden gelösten und dispergierten polymeren Bindemittel zu Wasser 1,5 : 1 bis 3,0 : 1 ist und
- das Massenverhältnis aus der Summe aller in der Zusammensetzung vorliegenden dispergierten polymeren Bindemittel zur Summe aller in der Zusammensetzung vorliegenden gelösten polymeren Bindemittel 3 : 1 bis 15 : 1 ist und
- maximal 2 Massenprozent sehr leicht- bis sehr schwerflüchtige organische Verbindungen, die Koaleszenzmittel, Weichmacher und organische Lösungsmittel beinhalten und bei Raumtemperatur und Normalluftdruck einen Siedepunkt von 30°C bis 300°C aufweisen und
- maximal 5 Massenprozent Füllstoffe, einschließlich Leichtfüllstoffe, enthalten sind und
- der pH-Wert neutral oder alkalisch eingestellt ist und
die Summe aus Wasser, Füllstoffen, sehr leicht- bis sehr schwerflüchtigen organischen Verbindungen, pH-Einstellungsagenzien und der polymeren Bindemittel (a) bis (c) kleiner oder gleich 100% ist.

2. Wässriger Dispersions-Parkettklebstoff nach Anspruch 1 **dadurch gekennzeichnet, dass** er 27 bis 39 Massenprozent Wasser und folgende mindestens drei polymeren Bindemittel enthält oder aus ihnen besteht:
a) 4 bis 16 Massenprozent mindestens eines gelösten Polyvinylalkohols,
b) 20 bis 65 Massenprozent mindestens eines wasserunlöslichen dispergierten Vinylacetat-Copolymers und
c) 3 bis 33 Massenprozent mindestens eines wasserunlöslichen dispergierten Acrylat-Copolymers, wobei
- das Massenverhältnis der Summe aller in der Zusammensetzung vorliegenden gelösten und dispergierten polymeren Bindemittel zu Wasser 1,6 : 1 bis 2,7 : 1 ist und
- das Massenverhältnis aus der Summe aller in der Zusammensetzung vorliegenden dispergierten polymeren Bindemittel zur Summe aller in der Zusammensetzung vorliegenden gelösten polymeren Bindemittel 4 : 1 bis 14 : 1 ist und
- maximal 0,5 Massenprozent sehr leicht- bis sehr schwerflüchtige organische Verbindungen, die Koaleszenzmittel, Weichmacher und organische Lösungsmittel beinhalten und bei Raumtemperatur und Normalluftdruck einen Siedepunkt von 30°C bis 300°C aufweisen und
- maximal 2 Massenprozent Füllstoffe, inkl. Leichtfüllstoffe, enthalten sind und
- der pH-Wert auf 7,0 bis 9,5 eingestellt ist und
die Summe aus Wasser, Füllstoffen, sehr leicht- bis sehr schwerflüchtigen organischen Verbindungen, pH-Einstellungsagenzien und der polymeren Bindemittel (a) bis (c) kleiner oder gleich 100% ist.

3. Wässriger Dispersions-Parkettklebstoff nach einem der vorherigen Ansprüche **dadurch gekennzeichnet, dass** er keine Koaleszenzmittel, Weichmacher, organische Lösungsmittel oder andere sehr leichtflüchtige bis sehr schwerflüchtige organische Verbindungen enthält.

4. Wässriger Dispersions-Parkettklebstoff nach einem der vorherigen Ansprüche **dadurch gekennzeichnet, dass** er keine Füllstoffe oder Leichtfüllstoffe enthält.

5. Wässriger Dispersions-Parkettklebstoff nach einem der vorherigen Ansprüche **dadurch gekennzeichnet, dass** die Dichte, gemessen gemäß DIN EN ISO 2811-1:2016-08, ≤ 1,1 g/cm³ ist.

6. Wässriger Dispersions-Parkettklebstoff nach einem der vorherigen Ansprüche **dadurch gekennzeichnet, dass** die nach DIN EN ISO 17178:2020-06 wie in der Beschreibung angegeben gemessene offene Zeit ≥ 20 Minuten ist.

7. Wässriger Dispersions-Parkettklebstoff nach einem der vorherigen Ansprüche **dadurch gekennzeichnet, dass** die Viskosität, gemessen nach DIN EN ISO 2555:2018-09 mit einem DV2T-RV Brookfield Rotationsviskosimeter, Spindelgröße R7 bei 20 U/min 50.000 bis 200.000 mPa·sund die aus den Viskositätsmessungen bei einer Spindeldrehzahl von einer, fünf und zwanzig U/min abgeleitete Strukturviskosität für den Strukturfaktor STF 20/5 ≤ 0,45 und den Strukturfaktor STF 20/1 ≤ 0,17 ist.

8. Wässriger Dispersions-Parkettklebstoff nach einem der vorherigen Ansprüche **dadurch gekennzeichnet, dass** die Mindestanforderungen an Zugscherfestigkeit und Gleitung gemäß DIN EN ISO 17178:2020-06 für einen harten, hart-elastischen und elastischen Parkettklebstoff nach 3 und 28 Tagen Aushärtungszeit erfüllt sind, wobei die Zugscherfestigkeit für gepresste Prüfkörper ≥ 3,0 N/mm² ist und für Prüfkörper mit einer Klebstoffschichtdicke von 1 mm ist die Zugscherfestigkeit ≥ 2,0 N/mm² und die Gleitung ≥ 1,0.

9. Wässriger Dispersions-Parkettklebstoff nach einem der vorherigen Ansprüche **dadurch gekennzeichnet, dass** die Zugbruchdehnung des ausgehärteten Klebstoffs, gemessen nach DIN EN ISO 527-1:2019-12, ≥ 75% ist.

10. Wässriger Dispersions-Parkettklebstoff nach einem der vorherigen Ansprüche **dadurch gekennzeichnet, dass** der Elastizitätsmodul, gemessen nach DIN EN ISO 527-1:2019-12, 10 N/mm² bis 120 N/mm² beträgt.

11. Wässriger Dispersions-Parkettklebstoff nach einem der vorherigen Ansprüche **dadurch gekennzeichnet, dass** die Zugscherfestigkeit, gemessen gemäß DIN EN ISO 17178:2020-06, Lagerung 4.2.4., eine Stunde nach Verklebung des Parketts ≤ 0,8 N/mm² ist.

12. Wässriger Dispersions-Parkettklebstoff nach einem der vorherigen Ansprüche **dadurch gekennzeichnet, dass** die maximale Querausdehnung der Parkettelemente innerhalb der ersten 12 Stunden nach der Verklebung ≤ 0,6% ist, wobei die Messung der Querausdehnung, wie in der Beschreibung angegeben, an einer 1 m breiten Fläche von 20 fugenlos nebeneinander gelegten und mit dem Untergrund verklebten Parkettstäbe von 5 cm Breite in 15-minütigen Zeitabständen erfolgt.

13. Verfahren zur Herstellung eines wässrigen Dispersions-Parkettklebstoffs, **dadurch gekennzeichnet, dass**
- in einem ersten Schritt ggf. Wasser und ggf. eine wässrige Lösung des mindestens einen Polyvinylalkohols (a) mit einer wässrigen Dispersion des mindestens einen Acrylat-haltigen Polymers (c) und einer wässrigen Dispersion aus 0 bis 90 Massenprozent der insgesamt zuzugebenden Masse des mindestens einen Vinylacetat-haltigen Polymers (b) bis zur Homogenisierung vermischt wird und
- in einem zweiten Schritt dieser Mischung das mindestens eine Vinylacetat-haltige Polymer (b) in Form mindestens eines in Wasser dispergierbaren Dispersionspulvers bis zur Erreichung der Endkonzentration des mindestens einen Vinylacetat-haltigen Polymers (b) unter Rühren zugemischt und bis zur Homogenisierung weitergerührt wird und
- ggf. in einem nachfolgenden Schritt alle weiteren Bestandteile des wässrigen Dispersions-Parkettklebstoffs, wie pH-Einstellungsagenzien, Dispergieradditive und/oder Entschäumer, unter Rühren zugemischt werden und
- in einem letzten Schritt die Mischung bis zur Homogenisierung weitergerührt, der pH-Wert überprüft und ggf. nachgestellt wird.

14. Verfahren zur Herstellung eines wässrigen Dispersions-Parkettklebstoffs, **dadurch gekennzeichnet, dass**
- in einem ersten Schritt ggf. Wasser und eine wässrige Lösung des mindestens einen Polyvinylalkohols (a) mit einer wässrigen Dispersion des mindestens einen Vinylacetat-haltigen Polymers (b) und einer wässrigen Dispersion aus 0 bis 90 Massenprozent der insgesamt zuzugebenden Masse des mindestens einen Acrylat-haltigen Polymers (c) bis zur Homogenisierung vermischt wird und
- in einem zweiten Schritt dieser Mischung das mindestens eine Acrylat-haltige Polymer (c) in Form mindestens eines in Wasser dispergierbaren Dispersionspulvers bis zur Erreichung der Endkonzentration des mindestens einen Acrylat-haltigen Polymers (c) unter Rühren zugemischt und bis zur Homogenisierung weitergerührt wird und
- ggf. in einem nachfolgenden Schritt alle weiteren Bestandteile des wässrigen Dispersions-Parkettklebstoffs, wie pH-Einstellungsagenzien, Dispergieradditive und/oder Entschäumer, unter Rühren zugemischt werden und
- in einem letzten Schritt die Mischung bis zur Homogenisierung weitergerührt, der pH-Wert überprüft und ggf. nachgestellt wird.

15. Verwendung des wässrigen Dispersions-Parkettklebstoffs gemäß einem der Ansprüche 1 bis 12 zum Kleben von unbehandeltem, ganz oder teilweise mit Holzbodenoberflächenbehandlungsmitteln behandeltem Parkett aus Holzarten aller Art, Holzpflaster, Bambus-Bodenbelägen und anderen Bodenbelägen auf Basis von Holzwerkstoffen auf einen Untergrund, wobei der Untergrund aus Gussasphalt, Beton, Zement, Zementestrich, Zementfließestrich, Zementmörtel, zementgebundener Holzfaser, Keramik, Naturstein, Calciumsulfatestrich, Calciumsulfatfließestrich, mineralischer Bodenspachtelmasse (Zement-/Calciumsulfatbasiert), Holz, Parkett, Holzwerkstoff, Sperrholz, Kork, Gips, Gipsfaser, Gipskarton, Hartfaser, textilem faserartigen Material, polymerem Material, Laminat, Grundierung und/oder einer Kombination dieser Materialien besteht.

## Claims

1. Aqueous dispersion parquet adhesive, **characterized in that** it contains or consists of up to 39 wt% of water and the following at least three polymeric binders:
a) at least 4 wt% of at least one dissolved polyvinyl alcohol,
b) at least 20 wt% of at least one water-insoluble, dispersed, vinyl acetate-containing polymer, and
c) at least 3 wt% of at least one water-insoluble, dispersed, acrylate-containing polymer, wherein
- the weight ratio of the sum of all the dissolved and dispersed polymeric binders present in the composition to water is 1.5:1 to 3.0:1, and
- the weight ratio of the sum of all the dispersed polymeric binders present in the composition to the sum of all the dissolved polymeric binders present in the composition is 3:1 to 15:1, and
- at most 2 wt% of very volatile to very semi-volatile organic compounds that include coalescing agents, plasticizers and organic solvents and have a boiling point of 30°C to 300°C at room temperature and normal atmospheric pressure, and
- at most 5 wt% of fillers, including lightweight fillers, are contained therein, and
- the pH is adjusted to neutral or alkaline, and
the sum of water, fillers, very volatile to very semi-volatile organic compounds, pH adjusters and polymeric binders (a) to (c) is less than or equal to 100%.

2. Aqueous dispersion parquet adhesive according to claim 1, **characterized in that** it contains or consists of 27 to 39 wt% of water and the following at least three polymeric binders:
a) 4 to 16 wt% of at least one dissolved polyvinyl alcohol,
b) 20 to 65 wt% of at least one water-insoluble, dispersed vinyl acetate copolymer, and
c) 3 to 33 wt% of at least one water-insoluble, dispersed acrylate copolymer, wherein
- the weight ratio of the sum of all the dissolved and dispersed polymeric binders present in the composition to water is 1.6:1 to 2.7:1, and
- the weight ratio of the sum of all the dispersed polymeric binders present in the composition to the sum of all the dissolved polymeric binders present in the composition is 4:1 to 14:1, and
- at most 0.5 wt% of very volatile to very semi-volatile organic compounds that include coalescing agents, plasticizers and organic solvents and have a boiling point of 30°C to 300°C at room temperature and normal atmospheric pressure, and
- at most 2 wt% of fillers, including lightweight fillers, are contained therein, and
- the pH is adjusted to 7.0 to 9.5, and
the sum of water, fillers, very volatile to very semi-volatile organic compounds, pH adjusters and polymeric binders (a) to (c) is less than or equal to 100%.

3. Aqueous dispersion parquet adhesive according to any of the preceding claims, **characterized in that** it does not contain any coalescing agents, plasticizers, organic solvents or other very volatile to very semi-volatile organic compounds.

4. Aqueous dispersion parquet adhesive according to any of the preceding claims , **characterized in that** it does not contain any fillers or lightweight fillers.

5. Aqueous dispersion parquet adhesive according to any of the preceding claims , **characterized in that** the density, measured in accordance with DIN EN ISO 2811-1:2016-08, is ≤ 1.1 g/cm³.

6. Aqueous dispersion parquet adhesive according to any of the preceding claims, **characterized in that** the open time, measured according to DIN EN ISO 17178:2020-06 as stated in the description, is ≥ 20 minutes.

7. Aqueous dispersion parquet adhesive according to any of the preceding claims, **characterized in that** the viscosity, measured in accordance with DIN EN ISO 2555:2018-09 using a DV2T-RV Brookfield rotational viscometer, spindle size R7 at 20 rpm, is 50,000 to 200,000 mPa·s, and the structural viscosity derived from the viscosity measurements at a spindle speed of one, five and twenty rpm is ≤ 0.45 for the structural factor STF 20/5 and ≤ 0.17 for the structural factor STF 20/1.

8. Aqueous dispersion parquet adhesive according to any of the preceding claims, **characterized in that** the minimum requirements in respect of tensile shear strength and shear elongation in accordance with DIN EN ISO 17178:2020-06 for a hard, hard-elastic and elastic parquet adhesive after 3 and 28 days of curing time are met, wherein the tensile shear strength for pressed test specimens is ≥ 3 N/mm² and for test specimens with an adhesive thickness of 1 mm the tensile shear strength is ≥ 2 N/mm² and the shear elongation is ≥ 1,0.

9. Aqueous dispersion parquet adhesive according to any of the preceding claims, **characterized in that** the tensile elongation at break of the cured adhesive, measured in accordance with DIN EN ISO 527-1:2019-12, is ≥ 75%.

10. Aqueous dispersion parquet adhesive according to any of the preceding claims, **characterized in that** the modulus of elasticity, measured in accordance with DIN EN ISO 527-1:2019-12, is 10 N/mm² to 120 N/mm².

11. Aqueous dispersion parquet adhesive according to any of the preceding claims, **characterized in that** the tensile shear strength, measured in accordance with DIN EN ISO 17178:2020-06, storage 4.2.4., one hour after bonding of the parquet is ≤ 0.8 N/mm².

12. Aqueous dispersion parquet adhesive according to any of the preceding claims, **characterized in that** the maximum lateral expansion of the parquet elements within the first 12 hours after bonding is ≤ 0.6%, the measurement of the lateral expansion, as stated in the description, being carried out at 15-minute intervals on a 1 m wide surface of 20 parquet strips of 5 cm width laid side by side without joints and bonded to the subsurface.

13. Method for producing an aqueous dispersion parquet adhesive, **characterized in that**
- in a first step, optionally water and optionally an aqueous solution of the at least one dissolved polyvinyl alcohol (a) is mixed with an aqueous dispersion of the at least one water-insoluble, dispersed, acrylate-containing polymer (c) and an aqueous dispersion of 0 to 90 wt% of the total weight to be added of the at least one water-insoluble, dispersed, vinyl acetate-containing polymer (b) until homogenization is achieved, and
- in a second step, the at least one vinyl acetate-containing polymer (b) in the form of at least one water-dispersible dispersion powder is added to this mixture, with stirring, until the final concentration of the at least one vinyl acetate-containing polymer (b) is reached, and stirring is continued until homogenization is achieved, and
- optionally, in a subsequent step, all the other components of the aqueous dispersion parquet adhesive, such as pH adjusters, dispersing additives and/or defoamers, are added with stirring, and
- in a final step, stirring of the mixture is continued until homogenization is achieved, then the pH is checked and adjusted if necessary.

14. Method for producing an aqueous dispersion parquet adhesive, **characterized in that**
- in a first step, optionally water and an aqueous solution of the at least one polyvinyl alcohol (a) is mixed with an aqueous dispersion of the at least one vinyl acetate-containing polymer (b) and an aqueous dispersion of 0 to 90 wt% of the total weight to be added of the at least one acrylate-containing polymer (c) until homogenization is achieved, and
- in a second step, the at least one acrylate-containing polymer (c) in the form of at least one water-dispersible dispersion powder is added to this mixture, with stirring, until the final concentration of the at least one acrylate-containing polymer (c) is reached, and stirring is continued until homogenization is achieved, and
- optionally, in a subsequent step, all the other components of the aqueous dispersion parquet adhesive, such as pH adjusters, dispersing additives and/or defoamers, are added with stirring, and
- in a final step, stirring of the mixture is continued until homogenization is achieved, then the pH is checked and adjusted if necessary.

15. Use of the aqueous dispersion parquet adhesive according to any of the claims 1 to 12 for bonding parquet of any kind of timber, wood-block paving, bamboo floor coverings and other wood material-based floor coverings, either untreated or fully or partially treated with wood flooring surface treatment agents, to a subsurface, wherein the subsurface consists of mastic asphalt, concrete, cement, cement screed, cement flowing screed, cement mortar, cement-bound wood fiber, ceramic, natural stone, calcium sulfate screed, calcium sulfate flowing screed, mineral leveling compound (cement-based/calcium sulfate-based), wood, parquet, wood-based material, plywood, cork, gypsum, gypsum fiber, plasterboard, hardboard, textile fibrous material, polymeric material, laminate, foundation, and/or a combination of these materials.

## Revendications

1. Colle de parquet en dispersion aqueuse, **caractérisée en ce qu'**elle contient jusqu'à 39 % en masse d'eau et les au moins trois liants polymères suivants ou est constituée de ceux-ci :
a) au moins 4 % en masse d'au moins un alcool polyvinylique dissous,
b) au moins 20 % en masse d'au moins un polymère dispersé insoluble dans l'eau contenant de l'acétate de vinyle, et
c) au moins 3 % en masse d'au moins un polymère dispersé insoluble dans l'eau contenant de l'acrylate, dans lequel
- le rapport massique de la somme de tous les liants polymères dissous et dispersés présents dans la composition à l'eau est 1,5 : 1 à 3,0 : 1 et
- le rapport massique de la somme de tous les liants polymères dispersés présents dans la composition à la somme de tous les liants polymères dissous présents dans la composition est 3 : 1 à 15 : 1 et
- 2 % en masse au maximum de composés organiques très facilement volatils à très difficilement volatils, qui comportent des coalescents, des plastifiants et des solvants organiques, et présentent un point d'ébullition de 30 °C à 300 °C à la température ambiante et à la pression atmosphérique normale et
- au maximum 5 % en masse de charges, y compris des charges légères, sont contenus et
- le pH est ajusté pour être neutre ou alcalin et
la somme de l'eau, des charges, des composés organiques très facilement volatils à très difficilement volatils, des agents d'ajustement du pH et des liants polymères (a) à (c) est inférieure ou égale à 100 %.

2. Colle de parquet en dispersion aqueuse selon la revendication 1, **caractérisée en ce qu'**elle contient 27 à 39 % en masse d'eau et les au moins trois liants polymères suivants ou est constituée de ceux-ci :
a) 4 à 16 % en masse d'au moins un alcool polyvinylique dissous,
b) 20 à 65 % en masse d'au moins un copolymère d'acétate de vinyle dispersé insoluble dans l'eau et
c) 3 à 33 % en masse d'au moins un copolymère d'acrylate dispersé insoluble dans l'eau, dans lequel
- le rapport massique de la somme de tous les liants polymères dissous et dispersés présents dans la composition à l'eau est 1,6 : 1 à 2,7 : 1 et
- le rapport massique de la somme de tous les liants polymères dispersés présents dans la composition à la somme de tous les liants polymères dissous présents dans la composition est 4 : 1 à 14 : 1 et
- au maximum 0,5 % en masse de composés organiques très facilement volatils à très difficilement volatils, qui contiennent des agents de coalescence, des plastifiants et des solvants organiques et présentent un point d'ébullition de 30°C à 300°C à la température ambiante et à la pression atmosphérique normale et
- au maximum 2 % en masse de charges, y compris des charge légères, sont contenus et
- le pH est ajusté de 7,0 à 9,5 et
la somme de l'eau, des charges, des composés organiques très facilement volatils à très difficilement volatils, des agents d'ajustement du pH et des liants polymères (a) à (c) est inférieure ou égale à 100 %.

3. Colle de parquet en dispersion aqueuse selon l'une quelconque des revendications précédentes, **caractérisée en ce qu'**elle ne contient pas d'agents de coalescence, de plastifiants, de solvants organiques ou d'autres composés organiques très facilement volatils à très difficilement volatils.

4. Colle de parquet en dispersion aqueuse selon l'une quelconque des revendications précédentes, **caractérisée en ce qu'**elle ne contient pas de charges ou de charges légères.

5. Colle de parquet en dispersion aqueuse selon l'une quelconque des revendications précédentes, **caractérisée en ce que** la densité, mesurée selon DIN EN ISO 2811-1:2016-08, est ≤ 1,1 g/cm³.

6. Colle de parquet en dispersion aqueuse selon l'une quelconque des revendications précédentes, **caractérisée en ce que** le temps ouvert mesuré selon DIN EN ISO 17178:2020-06 comme indiqué dans la description est ≥ 20 minutes.

7. Colle de parquet en dispersion aqueuse selon l'une quelconque des revendications précédentes, **caractérisée en ce que** la viscosité, mesurée selon DIN EN ISO 2555:2018-09 avec un viscosimètre rotatif DV2T-RV Brookfield, taille de broche R7 à 20 tr/min est 50 000 à 200 000 mPa-s et la viscosité intrinsèque dérivée des mesures de viscosité à une vitesse de broche de un, cinq et vingt tr/min est ≤ 0,45 pour le facteur de structure STF 20/5 et ≤ 0,17 pour le facteur de structure STF 20/1.

8. Colle de parquet en dispersion aqueuse selon l'une quelconque des revendications précédentes, **caractérisée en ce que** les exigences minimales de résistance au cisaillement à la traction et de glissement selon DIN EN ISO 17178:2020-06 pour une colle à parquet dure, dure-élastique et élastique sont remplies après 3 et 28 jours de temps de durcissement, dans laquelle la résistance au cisaillement et à la traction est ≥ 3,0 N/mm² pour les échantillons pressés et
la résistance à la traction
est ≥ 2,0 N/mm² et le glissement est ≥ 1,0 pour les échantillons avec une épaisseur de couche de colle de 1 mm.

9. Colle de parquet en dispersion aqueuse selon l'une quelconque des revendications précédentes, **caractérisée en ce que** l'allongement à la rupture par traction de la colle durcie, mesuré selon DIN EN ISO 527-1:2019-12, est ≥ 75 %.

10. Colle de parquet en dispersion aqueuse selon l'une quelconque des revendications précédentes, **caractérisée en ce que** le module d'élasticité, mesuré selon DIN EN ISO 527-1:2019-12, est de 10 N/mm² à 120 N/mm².

11. Colle de parquet en dispersion aqueuse selon l'une quelconque des revendications précédentes, **caractérisée en ce que** la résistance au cisaillement à la traction, mesurée selon DIN EN ISO 17178:2020-06, stockage 4.2.4., une heure après le collage du parquet, est ≤ 0,8 N/mm².

12. Colle de parquet en dispersion aqueuse selon l'une quelconque des revendications précédentes **caractérisée en ce que** l'extension transversale maximale des éléments de parquet dans les 12 premières heures après le collage est ≤ 0,6 %, dans laquelle la mesure de l'extension transversale, telle qu'indiquée dans la description,
sur une surface d'un mètre de large de 20 lames de parquet juxtaposées sans joints et de 5 cm de large et collées au support se fait à intervalles de 15 minutes.

13. Procédé de préparation d'une colle de parquet en dispersion aqueuse, **caractérisé en ce que**
- dans une première étape, on mélange éventuellement de l'eau et éventuellement une solution aqueuse d'au moins un alcool polyvinylique (a) avec une dispersion aqueuse d'au moins un polymère contenant de l'acrylate (c) et une dispersion aqueuse de 0 à 90 % en masse de la masse totale à ajouter d'au moins un polymère contenant de l'acétate de vinyle (b) jusqu'à homogénéisation et
- dans une deuxième étape de ce mélange, on ajoute sous agitation au moins un polymère (b) contenant de l'acétate de vinyle sous la forme d'au moins une poudre de dispersion dispersable dans l'eau jusqu'à l'obtention de la concentration finale d'au moins un polymère (b) contenant de l'acétate de vinyle et on continue à agiter jusqu'à homogénéisation et
- le cas échéant, dans une étape ultérieure, tous les autres composants de la colle de parquet en dispersion aqueuse, tels que les agents d'ajustement du pH, les additifs dispersants et/ou les agents antimousse, sont mélangés sous agitation et
- dans une dernière étape, on continue à agiter le mélange jusqu'à homogénéisation, on vérifie le pH et on l'ajuste si nécessaire.

14. Procédé de préparation d'une colle de parquet en dispersion aqueuse, **caractérisé en ce que**
- dans une première étape, on mélange éventuellement de l'eau et une solution aqueuse d'au moins un alcool polyvinylique (a) avec une dispersion aqueuse d'au moins un polymère contenant de l'acétate de vinyle (b) et une dispersion aqueuse de 0 à 90 % en masse de la masse totale à ajouter d'au moins un polymère contenant de l'acrylate (c) jusqu'à homogénéisation et
- dans une deuxième étape de ce mélange, on ajoute sous agitation au moins un polymère contenant de l'acrylate (c) sous forme d'au moins une poudre de dispersion dispersable dans l'eau jusqu'à l'obtention de la concentration finale d'au moins un polymère contenant de l'acrylate (c) et on continue à agiter jusqu'à homogénéisation et
- le cas échéant, dans une étape ultérieure, tous les autres composants de la colle de parquet en dispersion aqueuse, tels que les agents d'ajustement du pH, les additifs dispersants et/ou les agents antimousse, sont mélangés sous agitation et
- dans une dernière étape, on continue à agiter le mélange jusqu'à homogénéisation, on vérifie le pH et on l'ajuste si nécessaire.

15. Utilisation de la colle de parquet en dispersion aqueuse selon l'une quelconque des revendications 1 à 12 pour le collage d'un parquet non traité, entièrement ou partiellement traité avec des produits de traitement de surface de sol en bois composé de sortes de bois de tout type, de pavés de bois, de revêtements de sol en bambou et d'autres revêtements de sol à base de matériaux dérivés du bois sur un support, dans laquelle le support est constitué d'asphalte coulé, de béton, de ciment, de chape de ciment, de chape fluide de ciment, de mortier de ciment, de fibres de bois liées au ciment, de céramique, de pierre naturelle, de chape de sulfate de calcium, de chape fluide de sulfate de calcium, d'enduit de sol minéral (à base de sulfate de calcium et de ciment), de bois, de parquet, de matériau dérivé du bois, de contreplaqué, de liège, de plâtre, de fibres de plâtre, de carton-plâtre, de fibres dures, de matériau textile fibreux, de matériau polymère, de stratifié, de couche de fond et/ou d'une combinaison de ces matériaux.
